# EUROPÄISCHE PATENTSCHRIFT

(11) **EP 3 385 077 B1**
(45) Veröffentlichungstag und Bekanntmachung des Hinweises auf die Patenterteilung: **12.05.2021**
(21) Anmeldenummer: 18174622.3
(22) Anmeldetag: 22.05.2014
(51) Int. Cl.: B41F 15/08, H05K 3/12, B41F 15/00, B41F 15/34

(54) **ANLAGE ZUR HERSTELLUNG VON DREIDIMENSIONALEN SIEBDRUCKEN**
MACHINE FOR PRODUCING THREE-DIMENSIONAL SCREEN-PRINTED ARTICLES
INSTALLATION DE PRODUCTION D'IMPRESSIONS SÉRIGRAPHIQUES TRIDIMENSIONNELLES

(30) Priorität: 23.05.2013 DE 202013004745 U
(43) Veröffentlichungstag der Anmeldung: 10.10.2018
(62) Teilanmeldung aus: 14732817.3
(73) Patentinhaber: Exentis Knowledge GmbH, 5608 Stetten AG (CH)
(72) Erfinder: Bauer, Jörg, 56422 Wirges (DE)
(74) Vertreter: Wenzel Nemetzade Warthmüller Patentanwälte Part mbB

(56) Entgegenhaltungen:
- DE-A1-102008 043 543
- JP-A- 2002 331 640
- US-A- 4 930 413

## Beschreibung

### Gebiet der Erfindung

Die Erfindung bezieht sich auf Verfahren und eine Anlage zur Herstellung von dreidimensionalen Siebdrucken.

### Hintergrund der Erfindung

### Einleitung

Mit der Etablierung des Verfahrens im Siebdruck dreidimensionale Formkörper herzustellen hat sich ein Defizit in der verfügbaren Anlagentechnik offenbart. Zum heutigen Zeitpunkt existieren lediglich zwei eigene, selbst entwickelte und gebaute Prototypen der Anlagentechnik mittels derer die Verfahrenstechnologie 3-dimensionaler Siebdruck durchgeführt wurde. Ohne die spezifischen, für den 3-dimensionalen Siebdruck erforderlichen Anlagenteile und Funktionen zu benennen, bestehen diese Anlagen im Grundaufbau aus einem Drucktisch, Flachbett, einem Viersäulenhubwerk und einem Rakelwerk. Bisherige Publikationen zum 3D-Siebdruckverfahren zeigen diese Versuchsanlagen, ohne jedoch deren spezifische Konstruktion, Auslegung und Funktion zu offenbaren. Den Forschungs- und Entwicklungspartnern, denen zumindest einzelne Komponenten und Funktionen der Anlagentechnik und Funktion im Rahmen der Forschungs- und Entwicklungsaktivitäten dargelegt werden mussten, unterliegen der Geheimhaltungsverpflichtung. Es ist uns kein Hersteller bekannt, der die spezifischen Verfahrensanforderungen des 3-dimensionalen Siebdruckes anlagentechnisch umgesetzt hat, außer unseren eigenen im Haus entwickelten Prototypen, so dass derzeit das Verfahren in Forschung, Entwicklung oder Produktion unter Verwendung des 3-dimensionalen Siebdruckverfahrens und der 3-dimensionalen Siebdruckanlagentechnik nicht von unabhängigen Dritten angewendet werden kann.

Grundlage
der anlagentechnischen Anforderung und Konstruktion ist das in der EP 0627983 A1 beschriebene Verfahren zur Herstellung von Formkörpern mit vorbestimmter Porenstruktur. Dabei wird ein Formkörper lagenweise hergestellt, indem eine Körperlage gedruckt wird, eine Härtung der Lage erfolgt, auf die vorangehende Lage erneut gedruckt und wiederum gehärtet wird. Für einen Strukturwechsel, der sowohl Struktur- als auch Materialwechsel darstellen kann, wird das Siebwerkzeug gewechselt und lagenweise fortgedruckt. Verwendete Materialien sind Keramik, Metall, Glas, Kunststoff sowie Mischungen aus der selben Materialgruppe oder Kompositmischungen. Das 3-dimensionale Siebdruckverfahren selbst wurde überwiegend anhand von Dieselrußpartikelfiltern, Implantaten, Absorbern unter anderem als Solarthermieabsorber, Wärmetauschern, sogenannten Flow-Fields, Reaktoren und weiteren Funktionsbauteilen entwickelt. Die Möglichkeiten der Absorbertechnologie sind dabei in der Schrift EP 2021594 A1 beschrieben. Überwiegend verwendete Materialien für die Verfahrensentwicklung sind aus der Gruppe der Keramiken das Siliziumkarbid, Korund, Aluminium- und Zirkonoxid, Cordierit, Phosphatkeramiken und weiteren bis hin zu tonhaltigen Keramiken. Bei den Entwicklungen auf dem Glassektor konzentrierte sich die Entwicklung auf die Verwendung von siliziumhaltigen Rezepturen. Die Verfahrenstauglichkeit wurde auf dem Metallsektor mit Entwicklungen aus Edelstahl, eisenhaltigen Metallen, Kupfer, Aluminium, Wolfram, Molybdän und weiteren entwickelt. Ebenso erfolgreich war die Verfahrensentwicklung mit Kunststoffen wie Acrylate, Silikone. Hierbei lag der Fokus der Entwicklungen auf der Verfahrensentwicklung, der Produktentwicklung, vor allem der möglichen Rezepturen und der Verarbeitbarkeit im 3-dimensionalen Siebdruckverfähren.

Die dabei erforderlichen Entwicklungen auf der anlagentechnischen Seite des 3-dimensionalen Siebdruckverfahrens führten in eigenen Versuchs- und Anwendungsaufbauten der Anlagentechnik zu dem dieser Erfindung zugrunde liegenden Anlagentechnik und Anlagenverwendung als 3-dimensionale Siebdruckanlage und 3-dimensonale Siebdruckanlagenkomponenten, sowie Anwendung der entwickelten Anlagentechnik.

Als Stand der Technik
kann das eigens entwickelte Verfahren aus der EP 0627983 A1 "Verfahren zur Herstellung von Formkörpern mit vorbestimmter Porenstruktur" angeführt werden, ebenso das auf dem Verfahren basierende Anwendungspatent der ebenfalls aus eigener Entwicklung stammenden EP 2021594 A1 "Von einem Fluid durchströmbare Vorrichtung, welche als solarer Receiver ausgebildet ist". Weitere Veröffentlichungen zum 3-diensionalen Siebdruckverfahren beziehen sich auf das 3-diemensionale Siebdruckverfahren selbst. Darin dargestellte Ablichtungen der beiden eigenen Prototypen der Anlagentechnik zeigen lediglich grobe Anlagenbilder ohne technische Details oder Funktionen des 3-dimensionalen Siebdruckes und stellen keine Offenlegung der Anlagen- und Funktionstechnik der 3-dimensionalen Siebdruckanlage dar. Aus keiner Ablichtung die Anlagenprototypen enthaltenden Publikationen aus der Verfahrensentwicklung sind Lösungen der Anlagen- und Funktionstechnik ersichtlich. Die erste und zweite Prototypenanlage wurde im eigenen Forschungsbetrieb entwickelt und verwendet. Aus der Literatur und der Geschichte des Siebdruckes selbst ist eine Vielzahl von Siebdruckanlagen bekannt und auf dem Markt erhältlich, welche grundsätzlich nicht die Merkmale einer Siebdruckanlage für das 3-dimensionale Siebdruckverfahren aufweisen, dafür nicht vorgesehen sind und auch in den veröffentlichten Ausführungen nicht geeignet sind Körper im 3-dimensionalen Siebdruckverfahren herzustellen. Allgemein gehaltene Angebote der Anlagenhersteller zur kundenspezifischen Anpassung der Hard- und Software an die Erfordernisse, stellen ebenfalls keine Veröffentlichung oder Vorveröffentlichung einer 3-dimensionalen Siebruckanlage oder deren Komponenten und Funktionen dar.

Definitionsgemäß hat die oftmals verwendete Bezeichnung Körperdruck die Bedeutung der Bedruckung eines Körpers, nicht jedoch den Druck des Körpers selbst. Exemplarisch hierfür die Bedruckung eines Feuerzeuges oder Stiftes mit einem Schriftzug oder Logo. Im Runddruck steht die Bedruckung eines Zylinderkolbens mit einer Gleit-Schutzschicht aus Kohlenstoff exemplarisch für den Körperdruck, und in der technischen Anwendung der Druck einer Dichtung auf ein Gehäuseteil, wie beispielhaft für eine Automatikgetriebeschaltplatte. Dabei wird beim Flachdruck, Runddruck und weiteren Druckartbezeichnungen stets ein Gegenstand bedruckt, der Druck selbst stellt dabei nicht den Gegenstand selbst dar, wie beispielsweise das Dekor auf einer Fliese. Keine der vorgenannten Körper oder Druckmaschinenarten steht in kausalem Zusammenhang mit einem echten 3-dimensionalen Siebdruck oder der Anlagen-und Verfahrenstechnik dazu.

Zur Eindeutigkeit der Zuordnung von Positionsangaben der nachstehenden Erfindung wird in allen Angaben als Bezugsposition für die lotrechte Höhenangaben - Z-Achse oder als Applikationsachse bezeichnet- die planparallele Oberflächenlage der druckaufnehmenden Platte, auch als Drucktisch bezeichnet, angewendet, welche in der Ausgangslage Z=0, 000 mm ist. Diese Ausgangslage kann auch durch die Stärke des zu bedruckenden Mediums dargestellt werden, dies ist beispielsweise die Dicke des Papiers, welches bedruckt werden soll, oder die Höhe des Bauteiles, einer zu bedruckenden Gehäuseoberseite, der Oberfläche eines zu bedruckenden Feuerzeuges und anderes. Die Transportrichtung des Druckguts - die Fahrtrichtung des oder der Drucktische - wird in der Achszuordnung als X-Achse oder Abszissenachse bezeichnet. Die positionierungsrelevante Y- Achse, auch als Ordinatenachse bezeichnet, bildet mit der X-Achse eine planparallele Fläche. Unter Nutzen ist nicht die Anzahl von Körpern in der Druckfläche des Siebes oder Schablone gemeint, sondern die Anzahl von Druckflächen eines Layouts auf einem Drucktisch definiert.

Schließlich geht aus dem Stand der Technik in der Druckschrift WO 02/00437 (A1) eine Vorrichtung und ein Verfahren zur Herstellung von dreidimensionalen Siebdrucken hervor, bei dem mit einem Drucksieb zumindest ein auf einem Drucktisch angeordneter Drucknutzen mehrfach bedruckt wird.

### Aufgabe der Erfindung

Die Erfindung soll eine verbesserte Anlage zur Herstellung von dreidimensionalen Siebdrucken bereit stellen. Aufgabe der Erfindung ist eine Anlagentechnik des Sieb-oder in einer Sonderform des Schablonendruckes mit welcher Körper im 3-dimensionalen Siebdruckverfahren hergestellt werden können. Die Lösung der Aufgabenstellung der Erfindung einer 3-dimensionalen Siebdruckanlage soll sowohl die Funktion als 3-dimensionale Siebdruckanlage, technische Komponenten der 3-dimensionalen Siebdruckanlage als auch die Anwendung der 3-dimensionalen Siebdruckanlage selbst zur Herstellung von Körpern im 3-dimensionalen Siebdruckverfahren beinhalten, welche aus den Materialgruppen der Keramiken, der Metalle, der Gläser, der Kunststoffe, weiterer organischer und anorganischer Werkstoffe sowie biologische Werkstoffe und Mischungen derselben bestehen.

### Zusammenfassung der Erfindung

Die Aufgabe der Erfindung wird bereits durch ein Verfahren nach Anspruch 1 und eine Anlage zur Herstellung von dreidimensionalen Siebdrucken nach Anspruch 13 gelöst. Bevorzugte Ausführungsformen und Weiterbildungen der Erfindung sind dem Gegenstand der Unteransprüche zu entnehmen.

Die Erfindung betrifft ein Verfahren und eine Anlage zur Herstellung von dreidimensionalen Siebdrucken, also eine Anlage welche über ein Siebdruckverfahren einen Gegenstand herstellt, wobei sich ein dreidimensionaler Körper durch eine Vielzahl von Druckschichten aufbaut.

Die Anlage umfasst einen Drucktisch mit einem Drucksieb. Mittels des Drucksiebs ist zumindest ein Drucknutzen mehrfach bedruckbar.

Unter einem Drucknutzen wird diejenige Fläche verstanden, welche mittels der Anlage bedruckt wird.

Üblicherweise kann es sich dabei um einen Tisch handeln, auf dem ein Substrat angeordnet werden kann.

Gemäß der Erfindung wird nach jedem durchgeführten Druck der Wert des Absprungs um die Auftragsstärke des zuvor durchgeführten Druckes erhöht.

Es wird also vorzugsweise nach jedem Druckvorgang der Abstand des Drucksiebs zum Substrat bzw. zum Körper erhöht, was zur Folge hat, dass die Auftragsstärke der Folgedrucke sehr genau die gewünschte Größe einhält.

Bei einer Weiterbildung der Erfindung umfasst der Drucktisch eine Platte mit mehreren Drucknutzen.

Indem eine Platte mit mehreren Drucknutzen verwendet wird, kann die Geschwindigkeit mittels welcher dreidimensionale Körper bereitgestellt werden stark erhöht werden, indem bei einem Druckvorgang mehrere Drucknutzen bedruckt werden und so mehrere Körper, welche gleichartig oder unterschiedlich ausgestaltet sein können, aufgebaut werden.

Vorzugsweise ist die Platte mit den Drucknutzen in eine Härteanlage verfahrbar.

Es ist insbesondere vorgesehen, die Platte nach jedem Druckvorgang in eine Härteanlage zu verfahren. Vorzugsweise können in der Härteanlage mehrere Platten gleichzeitig gehärtet werden.

Die Härteanlage kann beispielsweise eine Mehrzahl von Aufnahmen umfassen um mehrere Platten gleichzeitig zu Härten.

So kann die Druckstation abwechselnd mit verschiedenen Platten beschickt werden, so dass während der Härtezeiten andere Platten bedruckt werden können.

Der Anlagendurchsatz kann so erheblich gesteigert werden. Bei einer Weiterbildung der Erfindung weist die Anlage zumindest zwei Härteanlagen bzw. Härtestationen auf, von denen aus der Drucktisch mit Platten mit Drucknutzen beschickbar ist.

Diese Härtestationen sind vorzugsweise angrenzend zur Druckstation angeordnet, wobei auf zumindest zwei Seiten der Druckstation, vorzugsweise auf vier Seiten der Druckstation, Härteanlagen angeordnet sind.

Die Druckstation kann so aus verschiedenen Richtungen beschickt werden.

Weiter umfasst die Platte vorzugsweise eine Vielzahl von Positionierungsmarken.

Diese Positionierungsmarken sind vorzugsweise jeweils einem Drucknutzen zugeordnet.

Beim Härten kann es insbesondere aufgrund von Temperaturveränderungen zu einer Veränderung der Größe der Platte kommen.

Mittels individuell zugeordneter Positionsmarken kann diese Größenordnung erfasst werden und bei der Ansteuerung der Druckstation berücksichtigt werden.

Erfindungsgemäß wird also abweichend von konventionellen Siebdruckanlagen eine Siebdruckanlagenverfahrenstechnik beansprucht, welche es ermöglicht, mehrere Drucklagen auf den gleichen Druckgutträger aufeinander zu drucken und dabei für jede folgende Drucklage den Abstand von druckaufnehmendem Druckgutträger mit Z=0, 000 mm zur Unterseite des Siebes oder der Schablone - auch als Druckseite bezeichnet - um die Summe der Auftragsstärken H der bereits durchgeführten Drucke zu vergrößern, so dass der allgemein als Siebdruckformdistanz oder auch als Absprung bezeichnete Wert A trotz der sich ändernden Gesamthöhe ΣH des sich durch die Addition der einzelnen Drucklagen eine Konstante bildet oder aber einer den im 3-dimensionalen Siebdruck möglichen Absprungfunktion f(A) folgt. Im Gegensatz zum Stand der Technik der Anlagenausgestaltung von Siebdruckanlagen, bei denen vor Druckbeginn in der Einrichtungsphase der Siebdruckanlage ein Absprung eingestellt wird, der sich über den ganzen Verarbeitungsprozess nicht ändert und seinen Bezugspunkt immer zur Nullposition des Drucktisches, der Ausgangslage Z beibehält, Z = konstant, ändert sich der Absprung in Bezug auf die Nullposition Z bei der 3-dimensionalen Siebdruckanlage mit jeder Drucklage um die Auftragsstärke H des jeweils durchgeführten Druckes Z = f(H). Erfindungsgemäß wird abweichend zum Stand der Technik, bei dem lediglich eine Absprungeinstellung vor Beginn des Herstellprozesses während der Einrichtungsphase eingestellt wird, hier in der Regel durch Anhebung oder Absenkung des Druckmaschinenoberwerkes mit anschließender Fixierung der Position durch mechanische, elektromechanische, elektrische Einrichtungen oder pneumatische Klemmvorrichtungen, wie Klemmschrauben, Schnellspanner, Wirbelstrombremsen, Federstahlklemmen und andere dem Fachmann bekannte Brems-und Blockiervorrichtungen, die den Hub führenden Säulen in der Position fixiert, nach jeder Druckdurchführung einer Drucklage auf einer Nutzenfolge ausführungsabhängig entweder der oder die Drucktische an der Druckposition um den Wert der Druckauftragsstärke abgesenkt, oder das Drucksieb, der Rakel und der Flutrakel, gegebenenfalls mit der als Druckoberwerk bezeichneten Druckwerkaufnahme, um die Auftragsstärke des Druckes angehoben. Dabei kann der Hub vorzugsweise, aber nicht ausschließlich durch bereits nach Abschluss des Rakelvorganges begonnen werden, d.h. bevor der Vorgang des Flutens eingesetzt hat. Dies ist vor allem bei einfachen Nutzen mit einem Drucktisch vorteilhaft, da der Hubänderungsvorgang wegen der geringen Maßvorgabe von 0,2 µm bis 250 µm pro Absprungänderung einer längeren Positionierungszeit bedarf. Bei der beanspruchten 3-dimensionalen Siebdruckanlage werden bei mehreren Drucktischen mit jeweils einem Druck, oder einem Drucktisch mit mehreren Nutzen pro Drucktisch, beziehungsweise mehreren Drucktischen mit jeweils mehreren Nutzen, erfolgt die Absprungänderung vorzugsweise nach dem Drucken aller ausgewählter Nutzenpositionen.

Während nach dem Stand der Technik zwar Höhenbestimmungen des Druckes bekannt sind, diese aber nicht zur Einstellung des Absprunges oder gar einer Absprungänderung eingesetzt werden sondern zur Einstellung der Farbmischung, der Farbintensität und weiteren Einstellungen die Qualität des Druckbildes betreffend durchgeführt werden, wird erfindungsgemäß bei der beanspruchten 3-dimensionalen Siebdruckanlage die Höhenbestimmung des Druckes, hier der höhenaufbauenden Druckschicht eines Druckdurchganges dahingehend bestimmt, dass von dem Messwert der Höhe nach dem Druck der Ebenenlage der Höhenwert vor dem Druck abgezogen wird, um so den in -Prozess Wert der Auftragsstärke des eben durchgeführten Druckes zu erhalten. Dieser resultierende Höhendifferenzwert ergibt das Maß der durchzuführenden Absprungsmaßänderung.

Im 3-dimensionalen Siebdruckverfahren nach EP 0627983 hat es sich experimentell bei verschiedenen Materialien und Layouts in der Forschung- und Entwicklung gezeigt, dass dieses Höhenänderungsmaß zwischen 0, 0002 mm und 0,2500 mm zu liegen kommt, abhängig von der Korngröße und der Kornform des eingesetzten Materials. Verschiedene Versuche zur Höhenbestimmung haben ergeben, dass es vorteilhaft ist, jeden Druckdurchgang zu bestimmen und nicht einen rechnerischen Mittelwert aus mehreren Druckdurchgängen zu verwenden. Ursächlich dafür ist, dass es sich überraschenderweise gezeigt hat, dass im 3-dimensionalen Siebdruckverfahren die Parameteränderungen durch Viskositätsänderung der Rezepturmasse, der Temperatur, der Atmosphäre im Druckbereich, der Frequenz der Zugabe an frischer Masse, manuell oder über eine Dosierungsanlage und die sich damit bildende Mischmasse von bereits gedruckter Masse und frisch zugeführter Masse, durchaus den einzelnen Höhenaufbau der einzelnen Drucklagen untereinander um bis zu 25 Prozent verändern können. Ein weiterer Änderungseinflussparameter für die effektive Auftragsstärke ist der Übergang der ersten Anfangsdrucke, bei dem das Druckrakel auch noch auf dem Druckuntergrund aufliegt, zu dem freien Körperdruck, bei dem das Druckrakel nur noch auf dem Körper selbst aufliegt. Des weiteren unterliegt der Höhenaufbau auch einer Änderung der Siebverhaltens über die Zeit und den Druckfortgang. Die anfänglichen Siebwerte stellen sich über einen längeren Zeitraum hin erst in einen stabilen Betriebszustand um, so dass auch hier Änderungen der Auftragsstärken resultieren.

Die Messung selbst wird für die beanspruchte 3-dimensionale Siebdruckanlage mit Messkontakt aber vorzugsweise kontaktlos durchgeführt. Hier sind Messungen in der einfachsten Form durch Taster zwar möglich, beanspruchen aber den Abschluss der Härtung als Messzeitpunkt, da ansonsten die Druckoberfläche beeinträchtigt werden kann. Diese Messmethode verlängert die Taktzeit der 3-dimensionalen Siebdruckanlage nachteilig. Bei den erfindungsgemäß für die 3-diemensionale Siebdruckanlage einsetzbaren Messmethoden sind visuelle Messungen auch möglich, beanspruchen aber hochqualifiziertes geschultes Personal und einen längeren Messzeitraum und liefern als Messergebnis ein personenabhängiges relatives Höhenaufbaumaß. Gleiches gilt für die zwar mögliche elektrische und gravimetrische oder akustische - Ultraschall - Messung. Es hat sich gezeigt, dass eine elektronische Messung mittels Laser, Laserdiode und entsprechender Auswertung sogar während des Transportvorganges des Körpers in der Anlage durchgeführt werden kann, wenn die Bezugsposition mechanisch stabil ist. Hierbei ist als beste Position der Messeinrichtungen die Höhenposition der Siebaufnahmenunterkante - speziell der Unterseitenposition des Drucksiebes - geeignet, vor allem, da sich der Messbereich, selbst bei mehreren Zentimeter hohen Körpern, nicht gegenüber dem Anfangszustand ändert. Wird bei der erfindungsgemäßen Anlagentechnik der 3-dimensionalen Siebdruckanlage die Höhenmessung während des Körpertransportes durchgeführt, so ist es zusätzlich möglich - ohne Zusatzmesszeiten zu beanspruchen, entweder ein zur Höhenmessung bestimmtes Messteil im Layout mit zu drucken, oder eine Messreihe über den Körper zu erstellen, um so einen auswertbaren Mittelwert aus einer Messreihe einer Drucklage zu erhalten. Dies ist vor allem vorteilhaft, wenn der Körper in seiner Struktur unterschiedliche Materialdichten aufweist, die den Höhenaufbau mit beeinflussen. Dieser Wert ist im Flachdruck unbedeutend, im 3-dimensionalen Siebdruckverfahren aber durch die Addition von bis zu tausenden von Drucklagen von hoher Relevanz, da selbst µm Auftragsstärkenunterschied bei beispielhaft 10.000 Drucklagen einen Unterschied von 10 mm ausmachen würden, der zu kompensieren - beziehungsweise auszugleichen wäre. Werden ein Nutzen auf einem oder mehreren Drucktischen bis zu mehreren Nutzen auf einem oder mehreren Drucktischen gedruckt, kann die Messung auf einen Körper reduziert werden. Allerdings erhöht eine kontinuierliche Messung aller Nutzen die Präzision erheblich. Unterliegt der Körper während des Druckprozesses einer Schwindung, was bislang durch Verwendung spezieller Rezepturen und Härtevorgänge vermieden werden konnte aber nicht auszuschließen ist, so ist die Messung der zur Höhenänderung des Absprunges erforderlichen Auftragsdifferenz zum Vordruck die Schwindung bewirkende Phase abzuwarten, dies kann ungünstigenfalls eine körpereigengewichtsbedingte Kompaktierung des darunter liegenden Körpers, der Härtevorgang oder der Kühlvorgang sein. Die Erfassung der Auftragsstärke, oder besser der Höhendifferenz zum davor liegenden Druck wird vorzugsweise durch mehr als eine Messstelle vorgenommen.

Eine großen Bedeutung im 3-dimensionalen Siebdruckverfahren kommt in der Anlagentechnik dem Oberwerk der Druckanlage zu. Diese stellt in ihrer Aufbauweise die formgebende Anlagenkomponente dar. Die erfindungsgemäße 3-dimensionale Siebdruckanlage hat dabei ein multifunktionelles Oberwerk, mit dem verschiedene Formgebungsparameter beeinflusst werden können. Ein Bestandteil ist die Siebaufnahme, vorzugsweise als Mutterrahmenkonstruktion für liegende oder hängende Siebe ausgelegt. Die Siebaufnahme kann und muss dabei in allen Lagen nicht nur zur Positionierung des Siebes in X und Y-Richtung ausrichtbar sein, sondern auch in allen Eckpunkten von Mutterrahmen und Siebrahmenaufnahme auch in Z-Richtung jeweils unabhängig voneinander. Eine Siebwechselvorrichtung entweder durch von außen zugeführte Siebe oder durch integrierte Siebpositionen für Wechselsiebe soll in der erfindungsgemäßen Siebdruckanlage nicht nur das Drucken eines Layouts ermöglichen, sondern auch das Drucken unterschiedlicher Layouts und Rezepturen. Alternativ kann die Druckstation auch aus mehreren Druckoberwerkstationen bestehen. Gleiches wird für das Rakelwerk mit Druck- und Flutrakel vorgesehen. Diese Option ermöglicht in einem geteilten Layout die Möglichkeit in einem Drucksieb mehrere Materialien gleichzeitig zu drucken. In der Forschungs- und Entwicklungsphase zum 3-dimensionalen Siebdruckverfahren und zur 3-dimensionalen Siebdruckanlagen Entwicklung konnte auch erkannt werden, dass zum Layout- und Rezepturwechsel auch der komplette druckausführende Oberwerksteil während des Körperaufbaus gewechselt werden kann. Dies ist zwar anlagentechnisch aufwändig, hat aber in Bezug auf die Wechselzeit einen wesentlich verkürzten Prozesszeitenbedarf. Vorzugsweise, aber nicht ausschließlich, kann das Drucksieb versetzt werden, gedreht werden und dabei auch aber nicht ausschließlich auch die Laufrichtung des Rakelwerkantriebes entsprechend beeinflusst werden, so dass es möglich ist, beim Druckvorgang die gleiche Siebmaschenrichtung und Druckrichtung beizubehalten. Dies ist insbesondere zur Aufrechterhaltung der Passgenauigkeit zur darunter liegenden Drucklage vorteilhaft. In einer einfachen Ausführung wird lediglich das Drucksieb in seiner Position geändert, alternativ kann aber auch der unter dem Drucksieb befindliche Druck, entweder nur dessen Druckauflage oder aber auch der ganze Drucktisch in der Position angepasst werden.

Eine weitere Verfahrens- und Anlagenkomponente des 3-dimensionalen Siebdruckverfahrens ist die Integration einer Begasungsanlage in der 3-dimensionalen Siebdruckanlage. Es hat sich gezeigt, dass entgegen dem Stand der Technik, bei dem die Masse - hier Farbe - mit einer hohen Wechselrate beaufschlagt ist, im 3-dimensionalen Siebdruckverfahren insbesondere durch die meist partikulären Rezepturbestandteile eine Beeinflussung der den Druck umgebenden Atmosphäre erforderlich ist. Erfindungsgemäß wird für die 3-diemensionale Siebdruckanlage eine Begasung beansprucht. Im einfachsten Fall dient die Begasung dazu, mittels Wassernebel die Verdunstung von Anmachwasser der Rezepturmasse auf dem Drucksieb zu kompensieren und gleichzeitig ein Antrocknen von Rezepturmasse in den Siebmaschen in der Zeit zwischen Drucken und Fluten zu minimieren. In einer weiteren Ausführungsform wird hierfür die Atmosphärenbegasung mit Lösungsmittel, einem Schutzgas oder einem Reaktionsgas beansprucht. Ist die Zusammensetzung der Rezepturmasse insgesamt empfindlich gegen bestimmte Gase oder Feuchten, so können die masseführenden Bestandteile der 3-dimensionalen Siebdruckanlage auch komplett von der Begasungseinrichtung umgeben sein, ebenso wie die Transportstrecken der Drucktischnutzen und die Strecke der Härtungsanlage. Der zu begasende Raum sollte entweder hermetisch abgeriegelt sein gegen unbeabsichtigte Gaseinströmungen oder aber unter zumindest leichtem Überdruck mit dem Schutz- oder Reaktionsgas betrieben werden können. Als zusätzliche Option kann die Abschottung oder Überdruckeinrichtung auch dazu herangezogen werden bestimmte Reinraumklassenbedingungen in Bezug auf Partikelverunreinigungen zu erfüllen, was für elektronische Körper oder für medizinische Körper, beispielsweise Implantate und andere Körper, vorteilhaft ist. Als weitere Option entsteht durch den Überdruckbetrieb oder die Abschottung und die Begasung die Möglichkeit, eine bestimmte Feuchte und Temperatur einzustellen, entweder aber nicht ausschließlich der Wassergehalt und die körpernahe Temperatur entweder durch das Begasungsmedium oder aber durch entsprechende Kühl- beziehungsweise Heizelemente. Überraschenderweise hat es sich bei einigen Versuchsrezepturmassen gezeigt, dass die Masse durch die Verdunstung um mehrere Grad Celsius abkühlte ohne dass die Rakelreibungswärme oder bei der Härtung in das Druckgut eingeführte gewollte oder ungewollte Wärme dies kompensieren konnte, die damit verbundene Viskositätsänderung der Rezepturmasse musste daher bei der Rezeptierung berücksichtigt werden. Besitzt die Rezepturmasse leicht flüchtige Bestandteile, so kann durch den Überdruckbetrieb und Kühlung die Emission dieser flüchtigen Bestandteile minimiert werden. Werden in der Rezepturmasse brennbare Substanzen verwendet, sind in der 3-dimensionalen Siebdruckanlage alle Zündquellen entsprechend in explosionsgeschützter Ausführung auszuführen oder aber unter Schutzgas eine Zündung der brennbaren Bestandteile zu unterbinden. Bei der Explosionsschutzausführung ist insbesondere auch durch Materialreibung entstehende statische Aufladung und Entladung zu berücksichtigen

Aus der EP 0627 983 ist bekannt, dass nach dem Drucken einer Ebenelage eine Verfestigung der gedruckten Ebene erfolgt bevor die nachfolgende Ebene gedruckt wird. Die Verfestigung soll dabei durch chemische, thermische oder physikalische Härtung erfolgen. Nach dem Stand der Technik sind durchaus Trocken- Kühl- Abdampf- oder Transportstrecken bekannt, die dort aber jeweils separate Prozesse darstellen und am Ende des Druckprozesses, normalerweise dem Auftrag der Farbe, stehen und einen eigenständigen unabhängigen Vorgang zum eindimensionalen Druck darstellen.

In der erfindungsgemäßen 3-dimensionalen Siebdruckanlage ist die Härtung, in seiner Funktion konventionell als Trocknungsanlage ausgeführt, als Bestandteil des Druckvorganges, da hierbei die Körpervorbereitung für den nachfolgenden höhenaufbauenden Druckschritt vorgenommen wird. Bei der Verwendung eines Drucktisches mit einem oder mehreren Nutzen ist die Härteanlage einseitig positionierbar, bei zwei Drucktischen ein- oder zweiseitig, werden die Drucktische aus bis zu vier Richtungen der Druckstation zugeführt, sind auch bis zu vier Härteanlagenpositionen Lösungen in der Anordnung der Härteanlagenkomponente. Dabei werden bei der erfindungsgemäßen 3-dimensionalen Siebdruckanlage alle Nutzen eines Drucktisches nacheinander bedruckt und dann anschließend gleichzeitig gehärtet. Die damit verbundene Verkürzung der Anlagengröße und des Zeitbedarfs der Härtung pro Nutzen wird erfindungsgemäß für die beanspruchte 3-dimensionale Siebdruckanlage beansprucht. Ebenso ist die Möglichkeit des Wechsels oder der Kombination der die Härtung bewirkenden Quelle, beispielsweise aber nicht ausschließlich elektrische Licht- und oder Wärmestrahler, Nebel- oder Sprühvorrichtung, Ausführungselement der erfindungsgemäßen 3-dimensionalen Siebdruckanlage. Mit der Darstellung in Fig I wird exemplarisch für eine Vielzahl von 3-dimensionalen

Siebdruckanlagenausgestaltungen eine dem Verständnis der Anlagenhauptkomponenten und Anlagenfunktion dienende Anlagenskizze dargestellt und beansprucht. Dabei ist Nr. 1 das Oberwerk, der 3-dimensionalen Siebdruckanlage, Nr. 2 die Station, welche vorzugsweise nicht nur Antriebs und Positionierelemente enthält, sondern auch die maßgeblichen Anlagensteuerungselemente. Nr. 3 ist ein Drucktisch, hier ein Langdrucktisch mit Mehrfachnutzen. Nr. 4 ist ein zweiter Drucktisch, ebenfalls mit Mehrfachnutzen. Nr. 5 symbolisiert die Härteanlage für den ersten Drucktisch, Nr. 6 stellt die zweite Härteanlage für den zweiten Drucktisch dar.

In dem Ausführungsbeispiel wird im rechten Winkel in Y-Richtung zur Tischtransportrichtung X gedruckt. Bei der exemplarischen 3-dimensionalen Siebdruckanlage wird in einem Zehnernutzen nacheinander die Position des Drucktisches 1 bedruckt. Dieser fährt anschließend unter die erste Härteanlage Nr. 5 in der die Härtung der ersten zehn Nutzen erfolgt. Während der Ausfahrt von Drucktisch 1 aus der Druckstation fährt der zweite Drucktisch in die Druckstation wo ebenfalls zehn Nutzen direkt nacheinander auf den Drucktisch gedruckt werden. Während der zweite Drucktisch aus der Druckstation unter die zweite Härteanlage Nr. 6 fährt um dort gehärtet zu werden, wird das 3-dimensionale Siebdruckanlagenoberwerk um den zwischenzeitlich an Drucktisch eins vorgenommenen Messwert an Druckauftragsstärke angehoben. In stetem Wechsel fährt nun Drucktisch 1 wieder in die Druckstation, danach in die erste Härteanlage, Drucktisch 2 in die Druckstation und von dort unter die zweite Härteanlage und so weiter. Das Druckschema für die exemplarische Ausgestaltung mit zwei Langdrucktischen mit Mehrfachnutzen ist in Fig II dargestellt. Dabei wird vorzugsweise orthogonal -in Y-Richtung - zur Tischtransportrichtung X gedruckt, da hierbei die Nutzenabstände ΔX minimiert werden können, so dass eine maximale Anzahl an Nutzen pro Drucktisch untergebracht werden kann. In vereinfachter Ausführung ist die 3-dimensionale Siebdruckanlage zur Herstellung von Körpern mit einem Drucktisch ausgestattet, wie in Fig I dargestellt mit zwei Drucktischen, oder aber bei gleicher Transportart bis zu 8 oder mehr Drucktische und Härteanlagen, vergleichbar mit Tortenstücken, in deren Zentrum die Druckstation positioniert ist. Bei mehr als 2 Drucktischen kann die Druckstation, beziehungsweise das Druckoberwerk, beziehungsweise das Drucksieb und der Rakel-und Flutrakelantrieb, entsprechend der räumlichen Zuordnung der Drucktransportrichtung X im gleichen Maß gedreht werden um die orthogonale Druckrichtung mit minimalem Nutzenabstand ΔX zu ermöglichen. ΔX ergibt sich aus dem der rechts- und linksseitigen Summe des Rakelüberstandes zum Layout welcher kleiner als die Summe der Rakeleinlauf- und Rakelauslaufstrecke ist. Wird ein beispielhafter langer Drucktisch verwendet, so erhöht sich die Anzahl der möglichen Nutzen mit kleinerem Layout im Drucksieb, im ungünstigsten Fall bei einem Körper in der Layoutfläche des Drucksiebes die Anzahl der Körper, welche in einem Arbeitsschritt der Härtung gemeinsam zugeführt werden können.

Werden ausgestaltungsmäßig ein öder mehrere weitere Materialien gedruckt, beispielsweise bei Multischichtmaterialkörpern, so kann dies durch ein oder mehrere weitere zentral angeordnete Druckwerke erfolgen, oder aber durch jeweils folgende weitere Druckstationen in negativer Drucktischtransportrichtung -X. Die alternativen Ausgestaltungsformen des Drucktisches als rund ausgeführter Tisch, entweder als Kreissegment oder als geschlossener Kreis mit einem Drucktisch oder aus mehreren aneinandergereihten Drucktischen ist hierbei dann für die Gestaltung einer 3-dimensionalen Siebdruckanlage naheliegend.

Eine derartige Anlagenkonstitution einer 3-dimensionalen Siebdruckanlage ist gegenüber konventioneller Siebdrucktechnologie, bei der in Linie produziert wird, das bedeutet auch mit kurzer Verweildauer des zu bedruckenden Teiles in der Druckanlage, in hohem Maße Taktzeitreduzierend im hier vorliegenden Batch- Betrieb mit langer Verweildauer der Drucke in der Siebdruckanlage. Die langen Einzeltaktzeiten ergeben sich aus der Notwendigkeit im 3-dimensionalen Siebdruckverfahren die einzelnen gedruckten Drucklagen vor der nachfolgenden Drucklage zu stabilisieren, so dass der Folgedruck sich einmal mit dem darunter liegenden Druck verbinden kann und zweitens der bereits gedruckte Teilkörper aus mehr als einer Drucklage nicht durch die Andruckkräfte der nachfolgenden Drucklage oder das sich bildende Eigengewicht deformiert wird. Entsprechend dem Erfindungsgedanken weist die 3-dimensionale Siebdruckanlage eine Vielzahl von verfahrensspezifischen Konstruktions- und Ausführungseinzelheiten auf, mit welcher ein standardisierter 3-dimensionaler Siebdruck eines Körpers ermöglicht wird.

Als wesentliche Kernkomponente konnte erfindungsgemäß für die 3-dimensionale Siebdruckanlage gefunden werden, dass die Hubvorrichtung für das Druckoberwerk, beziehungsweise die Absenkvorrichtung für den Drucktisch besondere Eigenschaften gegenüber konventionellen Siebdruckanlagen für den eindimensionalen Siebdruck aufweisen muss. Als erste relevante Gruppe der 3-dimensionalen Siebdruckanlage ist die Anlagenkomponente anzuführen mit welcher der Absprung gemessen, eingestellt und gesteuert werden kann.

Es wurde gefunden, dass bei einer Oberwerksanhebung zwar eine zentrale Anhebevorrichtung wie Servo- oder Schrittmotor mit Ketten- oder Riemenabtrieb verwendet werden kann, jedoch eine Korrekturmöglichkeit an allen Hubachsen vorhanden sein muss, um die sich im Laufe des Betriebs einstellende unterschiedliche Bauteildehnung zu kompensieren. Im einfachsten Fall ist dies ein integrierter Riemen- oder Kettenspanner welcher mechanisch oder elektronisch gesteuert Dehnungsunterschiede kompensiert. Dabei kann eine solche Vorrichtung auch von am Hub- oder Oberwerk angebrachten Messvorrichtungen gesteuert werden. Diese Ausgestaltungsform eines Hubwerkes für das Oberwerk liefert durchaus befriedigende Ergebnisse für einfache Drucke von Körpern im 3-dimensionalen Siebdruckverfahren, nicht jedoch für feine und hochpräzise Druckschichtdickenaufträge.

Eine zweite Ausgestaltungsform der Hubvorrichtung des Druckoberwerkes für 3-dimensionale Siebdruckanlagen ist ein dezentraler Antrieb von mindestens zwei Hubwerksachsen gleichzeitig - vorzugsweise einer im Druckeinlauf, einer im

Druckauslauf, ebenfalls gesteuert und mimikänderungskompensiert.

In der dritten Ausgestaltungsform der Hubvorrichtung des Druckoberwerkes für 3-dimensionale Siebdruckanlagen ist ein dezentraler Antrieb aller Hubwerksachsen des Oberwerkes gleichzeitig, vorzugsweise je einer an jeder Ecke des Druckoberwerkes, wobei jede Hubachse einzeln messtechnisch in ihrer Position erfasst und gesteuert werden kann. Für jede Ausgestaltungsform der Hubvorrichtung des Druckoberwerkes für 3-dimensionale Siebdruckanlagen hat es sich gezeigt, dass mit zunehmender Strukturfeinheit des Körpers eine Positionsfixierung der Hubsäulen erforderlich wird. Ebenfalls in zunehmender Qualität ist dies eine einfache Motorbremse beim zentralen Antrieb, über eine Motorbremse an den zwei, beziehungsweise vier Antriebeinheiten, gefolgt von einer Klemmfixierung der Hubsäulen gegen den Maschinenrahmen. Die höchste Präzision bei einer 3-dimensionalen Siebdruckanlage erreicht man jedoch bei einer Festauflage an jeder Hubsäulenachse. Diese Festauflage ist eine Auflage, auf welche das Oberwerk vom Hubantrieb abgesetzt wird. Dabei kann die Auflage gleichzeitig die Funktion der Höheneinstellung übernehmen indem die Auflagefläche für die Hubänderung mehr oder weniger in seiner Position verändert wird. Der funktionelle Vorteil ist ein Festanschlag in jeder Oberwerksposition mit der Möglichkeit diesen in Dimensionen von 0, 0002 mm in seiner Position zu verändern. Es hat sich gezeigt, dass eine Gewichtsentlastung des Hubwerksantriebes für die Wiederholgenauigkeit der Positionsfindung vorteilhaft ist. Diese kann in der Form erfolgen, dass dem Gewicht des Oberwerkes ein Gegengewicht während der Höhenverstellung entgegengesetzt wird; dieses Gegengewicht kann durch einfache Druckzylinder, welche auf das jeweilige Oberwerksgewicht an jeder Oberwerksecke eingestellt ist, erzeugt werden - beispielsweise durch Druckluft, Hydraulik oder Elektrisch. Eine Gegengewichtsbildung durch Massegewichte ist zwar möglich, beeinträchtigt aber das Oberwerksgewicht insgesamt nachteilig. Die Gegendruckeinrichtungen erleichtern ein Ausbalancieren der Hubachsenbelastung und erhöht die Positionierungssicherheit signifikant. Bei gleichzeitiger Verwendung eines Festanschlages für die Positionseinstellung wird zudem die Hubachsenbelastungsänderung und die damit verbundene Positionsänderung durch natürliche Materialdehnungen und Biegungen durch statische und dynamische Lastenänderung entgegengewirkt.

Die steigend höchste Präzision in der Hubpositionierung und der Stabilität der Position während des Druckvorganges, hier maßgeblich der Rakeldruckgang und die Druckauftragsstärkenmessung, erfolgt aufsteigend durch Antriebsbremse und oder Hubsäulenklemmung und oder Gegendruckeinrichtung und oder Festauflage und oder einer zusätzlichen Trennung von Hubachse und Führungsachse. Es hat sich gezeigt, dass die Oberwerksstabilität durch Verwendung von zusätzlichen Führungssäulen sich nicht nur positiv auf die Positionierungssicherheit in Bezug auf den Absprung, sondern auch auf die Maßhaltigkeit der Druckbildpositionierung auswirkt. Hiermit wird erfindungsgemäß die entsprechend der erforderlichen Positionierungspräzision mögliche optionale Anbringung von separaten Führungssäulen ohne Hubfunktion beansprucht. Wird die erfindungsgemäße Führungssäule zum Führen des Anhebens oder Absenkens des Druckoberwerkes verwendet, so kann bei gleichzeitiger Verwendung der Gegendruckelemente die Hubantriebsausführung minimiert ausgebildet werden, falls mit einer Festauflage zur Fixierung der Oberwerksposition gearbeitet wird. Entgegen der reinen Oberwerksgewichtsreduzierung bis zur Gewichtsneutralität aller Achsen mit 0 Kilogramm - schwebend - an jeder Hubachse zur unbelasteten Festauflageverstellung, was jetzt sogar mit kleinsten leistungsschwachen Motoren erfolgen kann, soll in der erfindungsgemäßen Absprungeinstellung eine moderate Belastung der Hubvorrichtung verbleiben um Positionsänderungen durch Lastzunahme in den Lagern zu minimieren. Es hat sich im Zuge der Erfindung der 3-dimensionalen Siebdruckanlage gezeigt, dass ohne Stabilisierungsmaßnahme nicht nur die statische Positionierungsgenauigkeit signifikant verbessert werden konnte, sondern auch die dynamische, durch den Rakeldruckvorgang ausgelöste Gewichtsänderung durch den Rakelandruck und die Rakelbalkengewichtsverlagerung über den Rakelweg mit Verschiebung des Gleichgewichtspunktes der Druckoberwerkes in X-Richtung kompensiert werden konnte. Dieser Faktor ist bei einfachen zweidimensionalen Drucken nahezu bedeutungslos, durch die Vielzahl von Drucklagen im 3-dimensionalen Siebdruckverfahren jedoch durch die Summation der entstehenden Fehler maßgeblich.

Unter den gleichen Ausstattungsmerkmalen kann auch die Positionsänderung des Absprunges durch ein Absenken der Drucktische erfolgen. Obwohl die Funktion genau dieselben Präzisierungserfolge aufweist und durchführbar ist, ist es als konstruktiv nachteilig zu betrachten, dass mit zunehmender Drucktischgröße und Nutzenlänge des Drucktisches das zu positionierende Anlagenteil größer wird. Zusätzlich ist die Positionierung der Führungen des Drucktisches und dessen Tischantriebes, bei Positionierungsstrecken bis mehr als 10 Meter, wesentlich anfälliger gegen Fehlpositionierungen. Ebenfalls möglich ist die Positionierung des Absprunges innerhalb des dann fest stehenden Oberwerkes möglich. Hier muss lediglich die Siebaufnahme und das Rakelwerk mit seinen Laufführungen positioniert werden. Allerdings ist bei Hubänderung über das Sieb- und Druckwerk die Unterbringung des erforderlichen Hubequipments nicht mehr unproblematisch. Funktionell machbar im 3-dimensionalen Siebdruckanlagenbau, aber bis auf wenige spezielle Anforderungen problematischer in der Ausführung.

Als zweite relevante Gruppe der 3-dimensionalen Siebdruckanlage ist die Anlagenkomponente anzuführen mit welcher der Körper in der 3-dimensionalen Siebdruckanlage transportiert, bedruckt und gehärtet wird.

Entgegen dem Stand der Technik beim 2-dimensionalen Siebdruck unterliegt der oder die Drucktische einer langen

Verweildauer in der Druckanlage und ist durch die in die Druckanlage integrierte Härtung einem zyklischen Wechsel der Betriebsbedingungen ausgesetzt. Auch unterscheidet sich die Drucktischposition durch die Möglichkeit des Mehrfachnutzen auf dem Drucktisch. Es hat sich gezeigt, dass konventionelle Drucktische in der Dauerbelastung mit Vakuum zur Deformation neigen und eine konkave Verformung aufweisen. Des weiteren verändert sich im Laufe der Langzeitnutzung die Tischdimension ausgehend vom Tischanschlag, beziehungsweise von der Tischantriebspositionsverankerung ausgehend. Während die Verbiegung zu einem ungleichmäßigen Rakelandruck führt und Ausdruck der einzelnen Drucklagen des Körpers unterschiedliche Höhen annimmt, bewirkt die Tischdehnung eine relative Layoutverschiebung über die Drucklagen. Da durch die zyklische Belastung mit bei der Härtung entstehender Wärme zu einer Dislokalisation des Druckbildes - einfach dargestellt, zu schrägen Körperwänden aus der lotrechten Y-Achsrichtung führt, leidet auch die Körperstabilität durch die entstehende Überlappung der Drucklagen. Insbesondere der Aspekt des Mehrfachnutzens auf einem Drucktisch führte zur Lösung der Problematiken konventioneller Drucktische bei der Anwendung für den 3-dimensionalen Siebdruck. Da es sich gezeigt hat, dass unter sehr geringen Leistungsmengen die Druckunterlage auf dem Drucktisch mittels geringem Vakuum fixiert werden kann, ist der Drucktisch vorzugsweise mit einem kleinen Vakuumvolumen ausgestaltet. Die besten Ergebnisse konnten mit Doppelplatten erreicht werden, welche beidseits vakuumführende Nuten aufweisen. In den Schnittpunkten der Vakuumnuten wurden dann die auf die Druckauflage wirkenden Vakuumbohrungen eingebracht. Generell kann für die 3-dimensionale Siebdruckanlage jede auf Langzeitvakuum ausgelegte Drucktischkonstruktion angewendet werden. Zur Kompensation der langzeitwirkenden Vakuumverformung kann bei klassischen Drucktischaufbau mit hohem Vakuumkammervolumen auf der Tischunterseite eine Kombination von Kompensationsbohrungen, beispielsweise ausgestattet mit automatisch wirkenden Ventilen, der drucktischoberseitige Vakuumverlust durch die Druckunterlage, ausgeglichen werden, so dass die Wölbungsneigung unterdrückt wird. Dabei ist jedoch die dann erforderliche Vakuumleistung des vakuumerzeugenden Aggregates zu berücksichtigen. Auf jeden Fall soll in einer 3-dimensionalen Siebdruckanlage die negative Wirkung der klassisch eingesetzten Seitenkanalverdichter in Bezug auf Schwingungsübertragung auf die eigentliche Druckanlage, Geräuschemission und vor allem Wärmeentwicklung des Verdichters im 100% Einschaltdauerlangzeitbetrieb vermieden werden, vorzugsweise durch den Einsatz laufruhiger ölfreier Membranpumpen oder von ölfreien Drehschieberpumpen welche vorzugsweise außerhalb der Druckstation angeordnet sein sollen - beispielsweise unterhalb der Härteanlagen. Der zweite Drucktischaspekt ist die Positionsstabilität des Drucktisches in X-Achsrichtung für jeden Nutzen des oder der Nutzendrucke. Während im klassischen Siebdruck die bekannten Drucktischpositionierungen vollkommen ausreichend sind, ist dies für den 3-dimensionalen Siebdruck nicht gegeben. Zwar sind die bekannten Vorschubmethoden mittels gesteuerter Wegerfassung hinreichend genau für ganz einfache Körper im Einfachnutzen, nicht jedoch im fein strukturierten Körper oder im Mehrfachnutzen. Erfindungsgemäß hat es sich gezeigt, dass der Drucktisch zwar pneumatisch, hydraulisch, elektrisch oder mechanisch angetrieben werden kann, entweder zweiseitig oder zentral im Mittelpunkt der Y-Achse des Drucktisches, jedoch vorzugsweise beim Einfahren des Drucktisches in die Druckstation am Drucktischanfang. Eine Antriebsanordnung im klassischen Zentrum der X-Achse des Drucktisches ist zwar möglich, jedoch bewirkt die Ausübung von Schub- und Zugspannung unterschiedliche Tischlagerbelastung mit resultierender Positionsungenauigkeit. Da ein großer, im vorliegenden Ausführungsbeispiel langer Drucktisch, mit einer Vielzahl von Druckpositionen ausgestaltet ist, welche zudem auch variabel eingestellt werden können, ist die Positionierung des Drucktisches in X-Richtung vorzugsweise, aber nicht ausschließlich, im Layoutzentrum des auszuführenden Druckes des Nutzen anzuordnen. Die absolute Positionierung und Positionsfixierung sollte im Layoutzentrum des Nutzen angeordnet sein und beidseitig wirkend ausgestaltet sein um Drucktischverschiebungen in Y-Achsrichtung zu vermeiden. Derart ausgestaltet wirkt lediglich die vom Layoutzentrum ausgehende Wärmedehnung des Drucktisches an jeder Layoutstelle unabhängig voneinander auf die Positionierungsgenauigkeit, selbst wenn in der Summe bei beispielsweise zwanzig Drucknutzen auf einem Drucktisch von einem zum anderen Drucktischende die Wärmedehnung um das zwanzigfache zunimmt, so ist bei jeden einzelnen Nutzen die wirksame Wärmedehnung lediglich einfach. Zur Feinpositionierung und Tischfixierung während des Druckvorganges eignen sich vorzugsweise aber nicht ausschließlich Parallelklemmen, Pneumatik- oder Hydraulikzylinder, Magnethalterungen, Kegel-Pyramidenzentrier- oder Trapezfixierungsvorrichtungen oder ähnlich wirkende Elemente, oder aber Achsklemmvorrichtungen. Gemeinsam muss den Fixiervorrichtungen sein, dass sie den Drucktisch an die vorgegeben Position der Mitte des jeweiligen Drucklayouts schieben, drücken, ziehen, gleiten lassen oder diesen anziehen. Auch eine Positionierung über einen Endanschlag mit einem festen Element, vorzugsweise in der geometrischen Mitte des darüber befindlichen Drucksiebes - vorausgesetzt das Drucklayout ist im Sieb zentral angeordnet - und einem oder mehreren, der Anzahl der Drucknutzen entsprechenden Anschlaggegendruckelemente, mit oder ohne Dämpfer, welcher an jedem Mittelpunkt der Nutzenlayoutmittelpunkte wirkt, ist für die 3-dimensionale Siebdruckanlage eine Lösung der Tischfeinpositionierung. Der maßgebliche Vorteil einer mechanischen Positionierung und Fixierung des Drucktisches ist die Elimination von komplexen Messwert Erfassungen, Auswertungen und Berechnungen zur Tischpositionierung über das Tischantriebssystem, da der Layoutmittelpunkt unter jeder Betriebsrahmenbedingung Mittelpunkt bleibt. So kann ein Motorantrieb mit inkremental erfasstem Messwert durchaus eine Position eines Tisches exakt anfahren, mit zunehmendem Antriebsgewicht allerdings mit länger andauernder Näherungssteuerung, diesen jedoch nicht über sich ändernde Betriebszustände, vornehmlich Temperatur und Gewicht, konstant halten. Auch ein Ketten-, Riemen-, Wellen- Kolben- oder Gleitantrieb ist unter den variierenden Betriebsumgebungsparametern nur für eine Drucktischposition geeignet. Demgegenüber ist eine Paarung von konventionell gesteuerter Antriebstechnik, beispielsweise über einen in Y-Achsrichtung des Tisches zentral angeordneten Riemen Omegaantrieb, der die optimale Antriebsart für 3-diemsnionale Siebdruckanlagen darstellt, das Anfahren multipler Positionen des Drucktisches möglich, sofern im jeweiligen Drucknutenmittelpunkt eine Feinpositionierung über ein Fixierelement erfolgt. Unter Verwendung eines Antriebes mit einem Anschlagpunkt ist zwar auch ein 3-dimensionaler Siebdruck möglich, jedoch muss hierbei die Dimensionsänderung des Drucktisches positionsabhängig aufwändig erfasst und die Ansteuerposition des Drucktisches permanent korrigiert werden. Da meistens zusätzlich die Änderungsparameter von Riemen, Ketten, Wellen, Spindeln und Achsen in die Ansteuerpositionsberechnung einfließen, ist dies für mit der Summation von möglichen Fehlern belastete Positionierungen nur bedingt als Lösung für die 3-dimensionale Siebdruckanlage bei vermindertem Präzisionsanspruch möglich.

Für den 3-dimensionalen Siebdruck von Körpern auf einer 3-dimensionalen Siebdruckanlage ist es erforderlich, den Vorgang der Härtung und oder der Trocknung in der Druckanlage zu implementieren. Während bei konventionellen Siebdrucktechniken die nach dem Stand der Technik stattfindende Trocknung des Druckes auf separat anschließbaren Anlagen erfolgt welche nicht direkt in den Druckvorgang der Siebdruckanlage eingreift und meistens kontinuierlich betrieben werden, ist dies bei der 3-dimensionalen Siebdruckanlage zur Herstellung von Körpern nach dem 3-dimensionalen Siebdruckverfahren durch den Verbleib des Druckgutes in der Siebdruckanlage über einen längeren Zeitraum und einer Vielzahl von Druck- und Härtevorgängen auf dem sich aufbauenden Körper, sowie der Erfordernis der dauerhaften Fixierung der Druckunterlage des Körpers zur Aufrechterhaltung der Positionssicherheit während der gesamten Druckzeit, die Härtung als auch die bei Temperatureinwirkung entstehende Erwärmung des Körpers mit darunter befindlichem Druckgutträger und Drucktisch unter Minimierung der Wärmebelastung der unterhalb des oder der Drucktische befindlichen Antriebs- und Führungselemente zu steuern und so die Maximierbarkeit der Taktzeiten zu ermöglichen. Unter Beachtung ökologischer Gesichtspunkte und der Minimierung der erforderlichen Stellfläche der 3-dimensionalen Siebdruckanlage, sowie unter Beachtung der sich ändernden Materialeigenschaften der Rezeptur innerhalb des sich aufbauenden gedruckten Körpers, setzt sich die Funktionsweise der Härteanlage, beziehungsweise der Härteanlagen insbesondere aber nicht ausschließlich für den Mehrfachnutzen eines oder mehrere Drucktische mit einer Belegung des Drucktisches mit mindestens einem Drucknutzen bis zur layoutgrößenabhängigen maximalen Anzahl von Nutzen eines Drucktisches, aus den Einzelfunktionen:
Härtevorgang mit oder ohne Zu- oder Abführung von Medien wie Luft, Gas, Feuchte, Reagenzien, Dämpfen, Stäuben, Nebeln, oder Tropfen, vorzugsweise jeweils fein und homogen verteilt. Der Härtevorgang selbst ist dabei zeit- und oder temperatur- und oder mengengesteuert, wobei sich die Art der Härtewirkweise über den Zeitraum der Härtung ändern kann. Die Härtung erfolgt mindestens innerhalb der mit Nutzen belegten Drucktischfläche und sollte sich in ihrer flächigen Dimensionierung nicht während der Zeit der kompletten Körperherstellung ändern. Die Härteanlage besitzt die Möglichkeit, die Wirkrichtung der Härtung, beispielsweise die Strahlungsrichtung eines IR- oder UV-Strahlers aus gleichen oder unterschiedlichen Richtungen auf den sich aufbauenden Körper einwirken zu lassen. Entstehen Wärme oder Dämpfe aus dem Härtevorgang, so ist eine Vorrichtung zum Absaugen dieser vorzusehen, dabei erfolgt die Absaugung vorzugsweise aber nicht ausschließlich nach oben um eine inhomogenisierende Wirkung von entstehenden Strömungen auf der Körperoberfläche oder bei strukturierten Körpern innerhalb der Strukturen zu minimieren. Meistens ist der Härteprozess von Wärmeentwicklung begleitet sofern diese nicht die Härtewirkung selbst ist. Die Härteanlage(-n) der 3-dimensionalen Siebdruckanlage verfügt zusätzlich über eine wärmeabführende Vorrichtung derart, dass nach Abschluss der Zeit der Härtewirkung die über dem Körper befindliche Atmosphäre, vorzugsweise aber nicht ausschließlich Luft mit mehr oder weniger aus dem Körper austretenden Gasen, aufsteigender Wärme und/oder Feuchte in Form von Wasser oder Lösungsmittel oder flüchtigen Rezepturbestandteilen der Masse mit welcher der Körper gedruckt wurde, oder aus einer Zusammensetzung derselben, wobei diese auch ein zuvor zugeführtes Härtereagenz sein kann, abgeführt wird. Mit der Abführung verbunden ist eine Temperierung des Körpers auf eine zuvor ermittelte und festgelegte Temperatur.

Als wesentlich für die Härtung ist der Abstand zwischen Körper und Härteelement anzusehen. Dieser Abstand ist ausschlaggebend für Wirkung, Intensität, Dauer und Einschaltdauer der härtewirksamen Einrichtung. Experimentell konnte ermittelt werden, dass es nicht erforderlich ist, in der engen Grenze der Absprungänderung auch die Härteanlage anzuheben, sondern dies in Intervallen im Millimeterbereich erfolgen kann.

Wird die Absprungänderung durch eine Absenkung des gesamten Drucktisches vorgenommen, so erübrigt sich eine zusätzliche Positionsänderung der Härteanlage, da sich der Abstand härtewirkendes Element zu Körperoberfläche dann nicht ändert. Wird die Absprungänderung jedoch über das Druckoberwerk oder das Druckwerk mit Siebaufnahme vorgenommen, so ist die Härteanlage in vorgegebenen Intervallen in seinem Abstand um die Höhe des gedruckten, der gedruckten Körper anzupassen. In einigen Fällen ist der Härtebedarf jedoch als Funktion der Zeit und/oder als Funktion der Körperhöhe auszuführen, da sich die Absorptionseigenschaften des Körpers mit zunehmender Körperhöhe ändern können. Dabei wird der Abstand zwischen Druckkörperoberseite und Härteelement entweder in der Zeit und/oder im Abstand und/oder in der Intensität korrigiert. Komfortabel ist die Härteanlagenhöheneinstellung, wenn diese direkt mit dem Druckstationsoberwerk gekoppelt ist und parallel mit diesem angehoben wird. Die zusätzliche Gewichtsbelastung des Druckstationsoberwerkes dagegen durch die Härteanlagenankoppelung beeinflusst die Positionsgenauigkeit der Absprungverstellung erheblich, so dass diese Lösung lediglich für gröbere Körper und unempfindlichere Rezepturen der Druckmasse angewendet werden sollte.

Befindet sich der Drucktisch nicht im Härtevorgang, ist die Härteanlage, beziehungsweise deren Härteelemente nach Möglichkeit abzuschalten, vor allem um die darunter liegende Anlagentechnik nicht unnötig zu belasten - zusätzlich erhöht diese Betriebsweise die Energieeffizienz der gesamten 3-dimensionalen Siebdruckanlage erheblich, anders als konventionelle Härte- oder Trockenanlagen für den konventionellen Druck, welche in der Regel kontinuierlich betrieben werden.

Durch die Gleichzeitigkeit der Härtung, und falls erforderlich Kühlung aller Nutzen eines Drucktisches gleichzeitig fällt nur einmalig der dafür erforderliche Zeitaufwand an, so dass der für einen ganzen Takt eines Drucktisches mit einer Vielzahl von Nutzen erforderliche Zeitaufwand erheblich gesenkt werden kann gegenüber einem im ungünstigen Fall mit einem Nutzen belegten Drucktisch. Beispielsweise beträgt im Einzeltakt mit einem Drucktisch mit einem Nutzen die reine Druckzeit etwa 1,2 Sekunden, die Härtung 45 Sekunden und die Abkühlung 35 Sekunden, zusammen werden mit dem Zeitbedarf des Tischtransportes von ebenfalls 1 Sekunde mehr als 82.2 Sekunden die für eine Drucklage für einen Nutzen benötigt wird. Der Zeitaufwand für die Höhenverstellung von etwa 11 Sekunden wird innerhalb der Härtezeit vorgenommen, so dass hierfür keine Zusatzzeit benötigt wird. Wird bei einem 20-er Nutzen die Zeit ermittelt, so ergeben sich für den Druck von 20 mal 1,2 Sekunden = 24 Sekunden, für die Härtung 1 mal 45 Sekunden und für die Kühlung 1 mal 35 Sekunden, für den Transport ergeben sich 20 mal 1 Sekunde innerhalb der Druckstation und 1 Sekunde für den Transport aus der Druckstation unter die Härteanlage. Für den 20-er Nutzen wird dann summarisch eine Zeit von 125 Sekunden benötigt. Für einen Nutzen also beispielsweise 6,25 Sekunden.

Da bereits während der Härtung des ersten Drucktisches der zweite Drucktisch mit Nutzen bedruckt werden kann entsteht auf der 3-dimensionalen Siebdruckanlage keine Stillstandzeit. Für einen 20-er Nutzen ist dann die effektive Prozesszeit einer Drucklage 6,25 Sekunden als exemplarisches Beispiel. Mit der Zeit-Reduzierung aus dem Beispiel ergeben sich zwei signifikante Parameter mit einem Drucktisch mit Mehrfachnutzen:
die Herstellzeit der 3-dimensionalen Siebdruckanlage wird beispielsweise auf 7,7% gegenüber dem Einfachnutzen der Prototypen mit einem Drucknutzen eines Drucktisches und einer Härteanlage reduziert, das entspricht einer Erhöhung der Stückkapazität um das 13-Fache.

Bei der Verwendung von zwei Drucktischen verbessert sich der Faktor weiter dahingehend, dass ausgehend von dem exemplarischen Beispiel die der zweite Drucktisch direkt im Anschluss zum ersten Drucktisch bedruckt wird - während die erste Drucktischhärtung erfolgt - und damit die Effektivzeit eines Nutzens auf 3,35 Sekunden sinkt. Erforderliche Zeiten für Massedosierung, Absprungänderung und andere fallen innerhalb der Abschnittsüberschneidungen an, so dass hierfür keine extra Zeiten benötigt werden. Die Effektivität der 3-dimensionalen Siebdruckanlage wird in ihrem Zeitbedarf hauptsächlich von der Härtezeit und der Nutzenanzahl bestimmt. Eine Reduzierung auf weniger als 4% der Effektivtaktzeit einer 3-dimensionalen Siebdruckanlage gegenüber den bestehenden Prototypenanlagen im Einzeldruck mit einem Drucktisch und einem Nutzen verdeutlicht ansehnlich die Wirksamkeit der 3-dimensionalen Siebdruckanlagentechnik, welche mit der Erfindung gemacht und beansprucht wird.

Die Reduzierung der Taktzeit wirkt sich dabei bereits bei zwei Drucktischen mit einer beziehungsweise zwei Härteanlagen und einem Nutzen pro Drucktisch aus, beziehungsweise auch bei einem Drucktisch mit mehr als einem Nutzen. In diesem Sonderfall kann der zweite Nutzen auch ein zweites Medium sein, welches in der Druckstation, die dann mit zwei Sieben und zwei Rakeln ausgestattet ist, hintereinander bedruckt werden.

Das angeführte Rechenbeispiel ist für ein Material mit Kombinationshärtung Wärme/Strahlung mit hoher Wärmespeicherkapazität einer hohen Reflexion im Korn und einem Porosierungsanteil von knapp 50 Volumen- % ermittelt. Die dritte wesentliche Bauteilgruppe einer 3-dimensionalen Siebdruckanlage ist das den Druck ausführende Druckoberwerk mit Druckwerkrahmen, Rakelwerkantrieb und Rakelwerk mit integrierten Messvorrichtungen und Steuerelementen. Entgegen konventioneller Siebdruckanlagen für den Flachdruck ist die Funktion und Einrichtung des Druckoberwerkes mit Siebaufnahme, Siebpositionierung und Druckwerk von entscheidender Bedeutung für die Funktionalität des 3-dimensionalen Siebdrucks. Entgegen dem Stand der Technik im klassischen graphischen und technischen Siebdruck summiert sich ein vom Druckanlagenoberwerk resultierender Fehler im 3-dimensionalen Siebdruck mit jeder Drucklage des Körpers. Als Fehlersummation entstehen in der Körperoberfläche Wellen, ungleiche Höhenverteilung, Bereiche mit mehr oder weniger Ausdruck und sich öffnende Fehlstellen ohne materialauftragende Bereiche. Insbesondere ist es im 3-dimensionalen Siebdruckverfahren auf einer 3-dimensionalen Siebdruckanlage nicht möglich, die Einstellungen und Fortdrucke mittels sogenannter Andrucke zu testen. Demgegenüber ist es im 3-dimensionalen Siebdruckverfahren eine Zwangsvorgabe, dass der erste Druck und alle folgenden Drucke, selbst nach Siebreinigung, Massewechsel, Layoutwechsel, Materialwechsel oder Druckunterbrechung sowohl in der Positionierung, der Druckbildhomogenität, der Druckauftragsstärke und der Layoutdeckung mit der darunter liegenden Druckschicht, ohne Andruck perfekt ausgebildet sind. Ein fehlerhafter erster Druck oder ein fehlerhafter Druck in einer der folgenden Druckschichten führt zwangsläufig zum Ausfall des Nutzens und damit des Körpers, selbst wenn von beispielsweise viertausend Drucklagen nur noch beispielsweise 20 Drucklagen zu drucken sind. Erreicht wird diese erforderliche Druckperfektion, welche auch als Verbesserung bei konventionellen Siebdruckanlagen für den klassischen Siebdruck verwendet werden kann, durch die spezielle Auslegung der Siebaufnahme, der Positioniereinrichtung, des Rakelwerkantriebes, des Rakelwerkes sowie der Oberwerkrahmenkonstruktion. Die Siebaufnahme einer 3-dimensionalen Siebdruckanlage ist für Flachsiebe und für Rundsiebe bei aufliegendem, als auch bei hängendem Sieb als statisch stabile Konstruktion auszuführen. Insbesondere sind die Auflageflächen für die Siebkante in der Siebaufnahme als planparallele Schiene auszuführen, welche sich bei unebener Siebrahmenform, oder Dickenunterschiede in Kleber und Siebgewebe, oder Siebrahmenverzug, selbst unter Einwirkung der Siebklemmen, nicht verwindet. Die nach dem Stand der Technik angewandte ausgleichende Nachgiebigkeit der Siebaufnahme führt zu einer nicht kontrollierbaren Dislokalisation von Siebgewebehorizontallage zur X-Y Achsrichtung und zu einer Änderung der Siebspannung. Da jedoch kein Sieb dem anderen gleicht, sowohl im Rahmen als auch im Gewebe und damit die größte Fehlerquelle überhaupt für den 3-dimensionalen Siebdruck und die 3-dimensionale Siebdruckanlage darstellt, entstehend durch ungleichmäßigen Kleberauftrag, Rahmenstärkenunterschiede, Rahmenverzug, Gewebeverzug, einer starken Temperatur- und Feuchtenabhängigkeit und einer steten Siebparameteränderung über die Siebgeschichte. Um in einer 3-dimensionalen Siebdruckanlage ein Drucksieb planparallel zur Drucktischauflage ausrichten zu können, hat es sich für die 3-dimensionale Siebdruckanlage als vorteilhaft erwiesen, die Siebaufnahmeschiene an jedem Eckpunkt separat in ihrem Abstand zur Druckunterlage einzustellen. Maß für die Einstellung ist das unbelastete Siebgewebe, oder bei kleineren Sieben auch die Innenkante des Siebrahmens. Dabei wird die Siebaufnahmeverstellung gegen die Drucktischoberfläche vorzugsweise planparallel ausgerichtet. Wird mit niedrigen Siebspannungen gearbeitet, so ist es auch möglich das Sieb antiparallel auszurichten, da hier durch Schubkräfte auf dem Siebgewebe beim Rakeln die Siebspannung mit zunehmender Entfernung vom Rahmen abnimmt. Entgegen konventioneller Methoden, hat es sich ebenfalls gezeigt, dass die Siebbefestigung direkt nach der Positionierung zu unbefriedigenden Ergebnissen führt. Je exakter die Positionierung stattfinden soll, umso anfälliger für Fehlplatzierung ist ein konventionelles Siebklemm- und Positionierungssystem. Insbesonders enden alle Positioniersysteme mit dem Mess- und Auswerteendpunkt. Danach erfolgt de Klemmung. Allerdings ist im 3-dimensionalen Siebdruck keine Korrekturmöglichkeit durch Andrucke gegeben, so dass eine dann festgestellte Dislokalisation durch den Klemmvorgang korrigiert werden könnte. In der 3-dimensionalen Siebdruckanlage erfolgt die Siebpositionierung durch Erfassung von mindestens 2 Passermarken, vorzugsweise aber nicht ausschließlich, von unten beleuchtet, falls die Kameras von oben die Marke erkennen, oder von oben, falls die Marken von unten her erkannt werden. Die optimalste Positionierposition ist auf der Mittellinie der Y-Achse des Layouts. Andere Positionen sind ebenfalls möglich. Optional wird in der 3-dimensionalen Siebdruckanlage ein siebspezifischer Korrekturwert eingeführt, welcher Siebänderungsparameter wie Dehnungsänderung, Feuchteänderung, Temperaturänderung, Massegewichtsbelastungsänderung oder Siebrahmenänderungen berücksichtigt. Praktikabel ist es, wenn-die Passermarken nicht im Einflussbereich des Rakel- oder Flutweges liegen. Selbstverständlich ist es auch möglich, die Passermarken in das Drucklayout zu integrieren. Klassische einfache Positionierungen durch Stifte, Schablonen oder ähnliches haben sich für die 3-dimensionale Siebdrucktechnologie als nicht genau genug herausgestellt, ebenso Positionierungen über den Siebrahmen. Ist die Positionierung durchgeführt, bei der Mutterrahmenkonstruktion für Flachsiebe und Rundsiebe wird das Sieb im Mutterrahmen fixiert und der Mutterrahmen vorzugsweise aber nicht ausschließlich an zwei Eckpunkten und einer Mittelachse manuell, pneumatisch, hydraulisch oder motorisch positioniert und fixiert. Die bei der Fixierung entstehende Positionsabweichung wird erfasst, der Mutterrahmen gelöst, neu positioniert und um die erfasste Positionsabweichung der ersten Fixierung korrigiert. Dann erfolgt die zweite Fixierung. Unter Umständen muss dieser Vorgang mehrmals durchgeführt werden um eine Positionierung des Siebes im µm Bereich zu erreichen. Es hat sich dabei gezeigt, dass konventionelle Siebpositionierungen mit Kameraunterstützung für diese geforderte Präzision lange Auswertezeiten haben - teilweise über Stunden hinweg - und keine nach der Positionierung auftretende Positionsänderung erfassen, auswerten oder korrigieren. Analog wird für die Festrahmenkonstruktion für Flachsiebe und Rundsiebe vorgegangen.

Da grundwegs im 3-dimensionalen Siebdruckverfahren mit 3-dimensinaler Siebdruckanlage davon ausgegangen wird, dass die Rakellaufachsen planparallel zur Drucktischoberfläche verlaufen, ist die Drucktischoberfläche, oder bei im Druck liegenden Passern die bereits gedruckte Körperoberfläche die Referenzfläche für die Siebpositionierung sowohl bei einer Körperstruktur, als auch bei mehreren Körperstrukturen. Wird die Positionierung demgegenüber manuell oder halbautomatisch vorgenommen, so wird für die Erfassung der Passermarkenposiiton eine Großprojektion des oder der Passermarkenabbilder erzeugt und mittels Hilfsmarken oder Sollpassermarken auf der Projektionsfläche manuell oder automatisch die Sieblage eingestellt. Die Verstellung der Siebachsen wird mittels Verstellelementen motorisch, pneumatisch, hydraulisch oder durch numerische Vorgabewerte manuell oder halbautomatisch oder automatisch ausgeführt.

Figur III zeigt die Verstellpositionen der Sieblage zur planparallelen Ausrichtung des Siebes zum Drucktisch Nummer 7, die Verstellpositionen der Siebe für die Layoutausrichtung sind in Nummer 8 dargestellt. Mit 9 ist der Siebrahmen gekennzeichnet, mit 10 das eigentliche Layout im Siebgewebe, exemplarisch für ein Flachsieb; analoge Positionen für Rundsiebe.

Figur IV stellt das Verstellschema des Druckrakelweges dar. Dabei ist Nummer 16 der Rakelbalken, an welchem das Rakel befestigt ist, Nummer 18 die Rakelhalteraufnahme mit Verstell- Schwenkachsen und Nummer 17 die Rakelaufnahme. Nummer 10 die positionsstabile hubauslösende Mechanik oder Hydraulik oder Pneumatik, oder Motorik und Nummer 9 die verschiebbare hubauslösende Mechanik oder Hydraulik oder Pneumatik oder Motorik mit Verschiebbarkeit 15 in Y-Achsrichtung. Die Rakelhalteraufnahme ist in Position 11 drehbar, nicht jedoch verschiebbar, und gegenüberliegend in Y-Achsrichtung verschiebbar 14 und schwenkbar auf der Kreissegmentbahn 12. An den festpositionierten Rakelaufnahmebalken 13 ist dann der eigentliche Rakel 17 verdreh- und verschiebesicher, auch unter Belastung durch den sich ändernden Rakeldruck während der Druckphase, bei der das Rakel auch auf der Druckunterlage aufliegt und im Druckfortgang nur noch auf dem bereits gedruckten Körper aufliegt, positioniert. Nicht dargestellt ist der links-und rechtsseitige in der Anschlaghöhe einstellbare Festanschlag sowie die zugehörigen Messvorrichtungen. Diese für Rakelwerke ungewöhnlich Einstellbarkeit beruht auf den negativen Ergebnissen konventioneller Rakelwerke, wie Rakelwerke mit Rakeldruckausgleich - meist pneumatisch, mit Rakelandruckanpassung - meist mit schnellem elektronischen Andruckregler oder einfachen kolbenstangengeführten Zylindern für den Rakelandruck und Rakelhub mit Endlagendämpfungsplatten. Gemeinsam ist den konventionellen Systemen, dass sie reagieren, also nach Eintritt des Ereignisses wirken. In der 3-dimensionalen Siebdruckanlage muss der Rakel alleine schon wegen der Repositionierbarkeit über bis zu tausenden von Drucken stets parallel auf das Siebgewebe aufsetzen, dieses links- und rechtsseitig gleich auf die Druckunterlage beziehungsweise auf den bereits vorliegenden Körper aufliegen und über den kompletten körperüberstreichenden Rakelweg auf konstanter Höhe gehalten werden ohne dass sich die Andruckwerte ändern, verbunden auch mit einer Konstanz in der Winkelung der Rakelkante. Gleiches gilt für den Flutrakel. Entgegen dem Stand der Technik hat sich für die 3-dimensionale Siebdruckanlage zwar eine Geschwindigkeitsbeeinflussung der hubauslösenden Mechanik, Pneumatik oder Motorik bewährt, nicht jedoch deren Endanschlagsverhalten. Hier wird bei der 3-dimensionalen Siebdruckanlage eine nicht bis zum Ende wirkende Drosselung und Dämpfung verwendet, die Rakelaufnahme selbst wird dagegen auf einen oder mehreren festeinstellbaren nicht gepufferten Festanschlägen aufgesetzt und derart angedrückt, dass während des Druckvorganges keine Höhenpositionsänderung oder Ausweichbewegung stattfinden kann. Flut- und Druckrakelwerk können unabhängig voneinander regel- steuer- und messtechnisch erfasst werden beziehungsweise gemeinsam gesteuert werden. Dabei ist die Formanordnung von Druckrakel und Flutrakel für separate Führung, für massebegrenzende Führung oder für geschlossene Flutung zwischen Flut- und Druckrakel in der 3-dimensionalen Siebdruckanlage auszuführen. Abhängig vom verwendeten rezepturbildenden Material ist auch die Möglichkeit vorgesehen die Flutung unmittelbar vor dem Druckvorgang durchzuführen, so dass das Siebgewebe in der Druckzwischenzeit nicht massebelastet ist.

In der 3-dimensionalen Siebdruckanlage sind für alle Achspositionen Korrekturmöglichkeiten in Form von Abweichungsvorgaben und Einstellungen aus der Idealposition vorgesehen. Dies wird erforderlich, wenn beispielsweise im Langzeitdruck die Masse in Siebwinkelungsrichtung konzentriert wird, oder das Siebgewebe des Siebwerkzeuges auf dem Absprungweg in eine Richtung mehr ausweicht als dies bei den anderen Sieben, bei Struktur und / oder Siebwechsel der Fall sein sollte.

Abschließend ist für die 3-dimensionale Siebdruckanlage festzustellen, dass über die Anforderung der langzeitwirkenden Positionssicherheit und der Positionssicherheit bereits im ersten Druck die Verwendung der Lagerkombination Loslager - Festlager zu großen Positionsschwankungen, durchaus im Millimeterbereich, führt, welche durch daraus resultierenden Positions- und Auftragstärkenänderungen nur zu mäßig maßgenauen Körpern führen kann, beziehungsweise durch die Summation von erzeugten Auftragsstärkenunterschieden meist zum Druckabbruch führen. Demgegenüber hat sich die Lagerkombination Festlager - Festlager, insbesondere durch die kontrollierten Rahmenbedingungen als optimal für einen versatzfreien und höhenkonstanten Körperdruck auf einer 3-dimensionalen Siebdruckanlage erwiesen.

Für die Präzision einer 3-dimensionalen Siebdruckanlage ist von entscheidender Bedeutung, dass entgegen konventioneller Technologien mit einer Referenzposition über das Maschinenleben hinweg dies nicht ausreichend für Präzisionen im µm Bereich einer 3-dimensionalen Siebdruckanlage ist. Ein sich zwangsläufig einstellender Verschleiß in den Führungen, den Antrieben und den beweglichen Bauteilen wird hier dadurch kompensiert, dass mit jedem Druckstart eines neuen Druckdurchganges für die Herstellung von Körpern im 3-dimensionalen Siebdruckverfahren stets ein neuer Referenzpunkt bestimmt wird, von dem aus der jeweils neue Druckvorgang für einen 3-dimensional gedruckten Körper begonnen wird. So wird in der 3-dimensionalen Siebdruckanlage sichergestellt, dass lediglich der während eines einzigen Herstellganges auftretende Verschleiß Auswirkungen auf die Präzision des Druckergebnisses haben kann. Mit einer Festlegung des Referenzpunktes für jeden Herstellungsvorgang erweitert sich der Zyklus von Instandsetzungs- und Wartungsarbeiten, beziehungsweise Ausfall der 3-dimensionalen Siebdruckanlage wegen Überschreitung der Toleranzwarn- und Toleranzüberschreitungslinie signifikant ohne selbst negative Auswirkungen auf den gedruckten Körper zu bekommen.

Die 3-dimensionale Siebdruckanlage ermöglicht die Anwednung der 3-dimensionalen Siebdrucktechnologie zur Herstellung und Verwendung von Körpern und vereinigt nach Figur I die Anlagenkomponenten Druckstation Fig I Nr. 2, Druckoberwerk Fig I Nr 1, einen oder mehrere Drucktische Fig I Nr. 3 und 4, eine oder mehrere Härtestationen Fig I Nr. 5 und 6 derart, dass pro Drucktisch ein oder mehere Drucknutzen nacheinander auf den Drucktisch gedruckt werden und daran anschließend gemeinsam und zeitgleich gehärtet werden. Während der Härtung des ersten Drucktisches wird der zweite und mögliche weiter folgende Drucktische bedruckt und anschließend gehärtet. Im Anschluß an die Härtung der gedruckten Körperlage erfolgt für die folgende Drucklage die Absprungsänderung um die Höhe der zuvor gedruckten Drucklage. Die 3-dimensionale Siebdruckanlage weist in ihrer Präzisierbarkeit eine Reihe von besonderen Einstell-und Funktionselementen auf, welche durch spezielle Tischkonstruktion, Höhenverstellungen, Positioniersystemverfahren, einem besonderen für die 3-dimensionale Siebdruckanlage konzipierten und ausgeführten Rakel- und Flutverfahren und einer flexibel ausrüstbaren integrierten Härteanlage die Effizienz des 3-dimensionalen Siebdruckverfahrens um mindestens 10% gegenüber adaptierten konventionellen Flachbettsiebdruckmaschinen aus der Forschung und Entwicklung des 3-dimensionalen Siebdruckverfahrens erhöht und gleichzeitig neben Layoutwechseln in den Körperschichten 3-dimensionale Präzissionsdrucke ermöglicht. Mit der 3-dimensionalen Anlagentechnik hergestellte Körper sind aus Keramik, Metall, Glas, Kunststoff, organischen oder anorganischen Werkstoffen , biologischen Werkstoffen oder Mischungen derselben bestehende dreidimensionale Körper und können mit oder ohne dreidimensionaler Struktur hergestellt und verwendet werden.

Weitere unabhängige Aspekte der Erfindung werden nachfolgend erörtert.

Gemäß einem weiteren Aspekt der Erfindung umfasst eine Anlage zur Herstellung von dreidimensionalen Siebdrucken einen Drucktisch mit einem Drucksieb, mittels dessen zumindest ein Drucknutzen mehrfach bedruckbar ist, wobei nach jedem durchgeführten Druck der Wert des Absprunges um die Auftragsstärke des zuvor durchgeführten Druckes erhöhbar ist.

Gemäß einem noch weiteren Aspekt der Erfindung umfasst die Anlage zur Herstellung von dreidimensionalen Siebdrucken einen Drucktisch, welcher eine Platte mit mehreren Drucknutzen umfasst.

Gemäß einem noch weiteren Aspekt der Erfindung kann die Platte mit den Drucknutzen in eine Härteanlage verfahrbar sein.

Gemäß einem noch weiteren Aspekt der Erfindung kann es vorteilhaft sein, wenn die Anlage zumindest zwei Härteanlagen aufweist, von denen aus der Drucktisch mit Platten mit Drucknutzen beschickbar ist.

Gemäß einem weiteren Aspekt der Erfindung umfasst die Platte eine Vielzahl von Positionierungsmarken.

Gemäß einem noch weiteren Aspekt der Erfindung kann dabei jedem Drucknutzen zumindest eine Positionierungsmarke zugeordnet sein.

Es ist außerdem ein Aspekt der Erfindung, dass nach jedem durchgeführten Druck einer Körperlage der Ausgangswert des Absprunges bezogen auf die Nullposition des Drucktisches um die Auftragsstärke des durchgeführten Druckes erhöhbar ist und dass die 3-dimensionale Siebdruckanlage ein- oder mehrere Drucknutzen aufweist, so dass die Änderung des Absprunges nach dem Drucken eines oder mehrerer Nutzen erfolgt bevor der nächste den Körper des jeweiligen Nutzen erhöhende Druckvorgang durchgeführt wird.

Gemäß einem noch weiteren Aspekt der Erfindung wird zur Erhöhung des Absprunges bezogen auf die Nullposition des Drucktisches um die Auftragsstärke des Druckes zumindest das Drucksieb, das Rakel und das Flutrakel um das Maß der Auftragsstärke angehoben.

Es kann nach einem weiteren Aspekt der Erfindung auch der Drucktisch um das Maß der Auftragsstärke abgesenkt werden.

Bevor der nachfolgende Druck der nächsten höhenaufbauenden Drucklage vorgenommen wird, ist gemäß einem Aspekt der Erfindung nach Bedrucken eines Drucktisches mit einem Nutzen, eines Drucktisches mit mehr als einem Nutzen, mehrere Drucktische mit jeweils einem Nutzen oder mehreren Drucktischen mit jeweils mehr als einem Nutzen eine Absprungänderung zwischen 0,2 µm und 250 µm durchführbar.

Entsprechend einem weiteren Aspekt der Erfindung ist zur Ermittlung der Auftragsstärke zur Einstellung der Änderung des Absprunges für die nachfolgende höhenaufbauende Drucklage eine mechanische, gravimetrische, elektrische und/oder optische Bestimmung der bereits vorliegenden Aufbauhöhe des Körpers durchführbar, um dessen Maßergebnis die Höhenänderung des Absprungs vorgenommen wird.

Es ist auch ein Aspekt der Erfindung, dass die Anlage einen mit der Druckanlage verbundenen Teil zur Härtung der einzelnen Körperlagen aufweist, in der zumindest ein Nutzen eines Drucktisches, vorzugsweise mehrere Nutzen eines Drucktisches mit einer härteauslösenden Bestrahlungseinheit ausgestattet ist, in der mehrere Drucknutzen gleichzeitig einer Härtebehandlung der Drucke aussetzbar sind.

Gemäß einem noch weiteren Aspekt der Erfindung kann die Bestrahlungseinheit verschiedene Strahlungsquellen aufweisen.

Gemäß einem weiteren Aspekt der Erfindung können die ganze oder Teile der masseführenden Anlage zur Begasung und/oder Temperierung gegen die Umgebung hermetisch und/oder durch Überdruck abschottbar sein.

Gemäß einem weiteren Aspekt der Erfindung ist eine Druckstation aus einer oder mehreren Aufnahmen für Drucksiebe, einem oder mehreren Rakelaufnahmen, einem oder mehreren Flutrakelaufnahmen und mindestens zwei Systemen zur Erfassung, Auswertung und Steuerung von Passermarken ausgestattet, und bei der das den Druck ausführende Oberwerk gegen die Positionslage des Körpers, welcher sich auf dem Drucktisch befindet ausgerichtet, verschoben, gedreht oder durch eine zweite oder mehrere weitere Oberwerke vor und während des Druckens gewechselt werden kann, so dass neben einem Material und einer Layoutausrichtung auch mehrere Materialien in einer oder mehreren Layoutausrichtungen oder aber gegen den vorangehenden Druck versetzt, gedreht oder verschoben gedruckt werden kann.

Gemäß einem noch weiteren Aspekt der Erfindung besteht die Anlage zur Herstellung von dreidimensionalen Siebdrucken aus den Anlagenbestandteilen von jeweils mindestens einem Drucktisch, einem Drucktischantrieb, einer Druckstation, einem Druckoberwerk, einer Hubvorrichtung für das Druckoberwerk oder einer Absenkvorrichtung für den Drucktisch, einer Härteanlage, einer Steuerungsanlage, einer Mess- und Steuervorrichtung für Drucktischposition, Siebposition, Oberwerksposition sowie Rakel- und Flutrakelposition und Weg, mit der Körper hergestellt werden können, welche optional zusätzlich Anlagenkomponenten zum Siebwechsel, zu Rezepturmassen zu-und/oder Rezepturmassenabführung, einer Zu- und/oder Abführung von Reaktions- oder Schutzgas, reaktiven Substanzen, zur Klimatisierung in Bezug auf Feuchte, Temperatur und Druckverhältnisse, Mess- Auswerte- und Steuervorrichtungen für Absprungposition, Hubmaß, Rakel-und Flutrakelposition und Weg, Härtewirkparameter und Taktzeitenoptimierung aufweisend auf einem oder mehreren Drucktischen in einem oder mehreren Nutzen pro Drucktisch Körper aus Keramik und/oder Metall und/oder Kunststoff in organischer und/oder anorganischen Zusammensetzung in der sich wiederholenden Reihenfolge Druckvorgang - Härtevorgang - Absprungänderung um die vorangehende Druckauftragsstärke mit oder ohne Wechsel der Strukturvorgabe des Körpers durch Wechsel und oder Versetzten und/oder Drehen des Drucksiebes oder des Drucktisches lagenweise erzeugt, wobei ein Körper aus mindestens zwei Drucklagen bestehend Einzeldrucklagenhöhen zwischen 0, 0002 mm und 2 mm aufweist.

Die Hubvorrichtung des Druckanlagenoberwerkes kann mit Motorbremse, Hubachsenklemmfixierung, Gegengewichtselement, Festauflage und/oder einer Trennung Hubachsen von Führungsachsen ausgestattet sein.

Der oder die Drucktische ist/sind zweiteilig aufgebaut und weist/weisen gegenüberliegende Vakuumnuten oder zentral angeordnete Vakuumkanäle auf.

Gemäß noch einem weiteren Aspekt der Erfindung wird der Hub des Druckoberwerkes oder die Absenkung des oder der Drucktische, oder die Anhebung oder Absenkung der Siebaufnahme und des Rakelwerkes in einem fest stehenden Druckanlagenoberwerkes in der Reihenfolge und Ausführung mit zentral angeordnetem Hubantrieb mit Lastübertragung über die Führungssäulen, mit Hubantrieb an jeder Führungssäule mit Lastübertragung über die Führungssäulen, mit Hubantrieb neben jeder Führungssäule mit Lastübertragung durch den Hubantrieb, mit Hubantrieb neben jeder Führungssäule mit gewichtsentlastender Vorrichtung zumindest während des Hubvorganges, in jedem Fall vorzugsweise mit einem Festanschlagspunkt oder einer oder mehrerer für die Führungssäule oder Hubsäule geeigneten Fixiervorrichtung in Form einer motorischen Bremse, einer hydraulischen oder pneumatischen oder elektrischen oder magnetischen Klemmvorrichtung zur Fixierung der Säulenposition bei denen mindestens eine Messvorrichtung ebenfalls in der Reihenfolge steigender Präzisionsanforderung für eine Antriebspositionserfassung und Positionssteuerung, in Form eines Drehgebers, einer Meßschiene, eines Tasters, einer kontaktlosen Messvorrichtung, vorzugsweise einer Infrarot- oder Lasermessvorrichtung verwendet, welche zumindest je eine in die Hubsteuerung eingreifende Meßstelle pro Führungs- oder Hubsäule aufweist.

Ferner ist ein Aspekt der Erfindung, dass der oder die Drucktische nach dem Drucken aller Nutzen einer Ebenenlage vollständig unter eine Härteanlage transportierbar ist/sind und dort zeitgleich die Härtung der Druckschicht vornehmbar ist, wobei die Härteanlage in ihrem Abstand der sich aufbauenden Höhe des Körpers angepasst ist, wobei während und/oder nach der Härtung eine Temperierung des Körpers stattfindet, welche vorzugsweise durch Begasung oder Befeuchtung in ihrer Atmosphärenzusammensetzung die Homogenisierung der Oberflächeneigenschaften des Körpers unterstützt wird.

Weiterhin ist das Druckoberwerk des Drucktisches kann aus einer in allen Achspunkten in der Höhenposition individuell oder automatisch einstellbaren Siebaufnahme besteht, mit der das jeweilige Sieb planparallel oder mit Korrekturwerten versehen parallel zur Drucktisch oder Körperoberfläche ausrichtbar ist und welches eine aus mehr als einem Siebpositionierungselement besteht mit welchem das Sieb ausrichtbar ist, wobei die Positionierung und Passermarkenerfassung und Auswertung über den Sieb- oder Rahmen- oder Mutterrahmenklemmvorgang hinaus geht mit der Möglichkeit der Nachpositionierung nach dem ersten Positioniergang zur Verhinderung von Dislokalisationen durch den Klemmvorgang; dabei erfolgt die Positionierung des Siebes über im Sieb integrierte Passermarken, welche vorzugsweise aber nicht ausschließlich als Durchlichtmarken ausgeführt sind mittels geeigneter Kameras und Beleuchtung und bei der die Messung der Position des Siebes vorzugsweise aber nicht ausschließlich kontaktlos erfolgt mit der Möglichkeit der manuellen, halbautomatischen oder automatischen Verstellung der Höhenpositionen der Siebaufnahme über alle Ecken und Seiten des Siebrahmens, beziehungsweise der Sieblayoutausrichtungsverstellung mittels visueller Projektion der Passermarken oder mittels elektronischer Auswertung mit Passergenauigkeiten bis in dem µm Bereich.

Es ist auch ein Aspekt der Erfindung, dass das Rakelwerk, bestehend aus Druckrakelwerk, Flutrakelwerk und Massedosierwerk in den beweglichen Achsen und Lagern jeweils vorzugsweise, aber nicht ausschließlich, mit der Lagerkombination Festlager - Festlager ausgerüstet ist und die Achsbewegung von Flutrakel und Druckrakel einzeln oder gemeinsam mit Flutung direkt nach dem Druckvorgang oder Flutung direkt vor dem Druckvorgang gesteuert ausgeführt wird, wobei alle Achsrichtungen in ihrer planparellen Aurichtung mittels Verstellvorrichtungen in ihrer Achslage um vorbestimmbare Korrekturwerte verändert werden können, ohne dass sich die Korrekturänderungen zwangsweise auf beide Achsbewegungslagen von Flutrakel und Druckrakel auswirkt und bei der die Positionsbestimmung mittels geeigneter vorzugsweise aber nicht ausschließlich kontaktloser Messvorrichtungen bestimmen lässt und wahlweise manuell, halbautomatisch oder automatisch ausgewertet, und in die Achssteuerung des Rakelwerkes eingreifen kann.

Gemäß einer vorteilhaften Ausgestaltung der Anlage zur Herstellung von dreidimensionalen Siebdrucken ist die Steuerung und Regelung des offenen oder geschlossenen Druck- Flutrakels vorzugsweise dahingehend ausgestaltet, dass die Druckrakelunterkante planparallel auf das Drucksieb oder die Druckschablone an einer vorbestimmbaren Position links- und rechtsseitig zeitgleich aufsetzt, die Rakelkante das Siebgewebe, oder die Schablone, parallel auf die Druckunterlage, beziehungsweise auf bereits gedruckte Lagen des Körpers niederdrückt und daran anschließend mittels verstellbarem Festanschlag für die Rakelandruckendanschlagsposition den Rakelandruck ausübt, wobei die Bewegungsabläufe mittels geeigneter Dämpfungselemente beeinflussbar sind, ohne dass der Anschlagspunkt des Rakelhubes durch übliche Dämpfungselemente im Anschlag mit abweichenden Reproduktionswerten beeinflusst werden kann, dahingehend, dass sie Einstellbarkeit der Rakel-, und gegebenfalls auch der Flutrakelmechanik, aus einem stets lotrecht wirkenden hydraulischen oder pneumatischen oder motorischen Antrieb, vorzugsweise zweiseitig, besteht, an dem die Rakel- oder Flutrakelaufnahme derart fest angebunden ist, dass mittels einseitigem positionsfestem Drehlager und anderenseitigem in Y-Achsrichtung verschiebbarem und in der Position fixierbarem Schwenklager die Rakelausrichtung im Aufsetzunkt auf das Siebgewebe, beziehungsweise auf die Schablone, und den Aufsetzbereich auf die Druckunterlage beziehungsweise bereits gedrukter Körperlagen sowie den Andruck während des Druckvorganges stets parallel erfolgt, ohne dass Siebspannungsunterschiede, Layoutdichteunterschiede, Massereibungswiderstände und andere untergeordnete Einflußparameter eine Lageänderung der Druck- und gegebenfalls der Flutrakelkante ermöglichen, derart, dass konventionell stattfindende Ausgeleichsbewegungsvorgänge im Verlauf des Rakelweges über das Druckgut hinweg nicht stattfinden können, und wobei das Rakelwerk mit geeigneten, vorzugsweise aber nicht ausschließlich, kontaktlosen Messvorrichtungen ausgestattet ist, mittels derer die Positionen und Druckverhältnisse der Druck- und gegebenfalls auch der Flutrakelkante erfasst, ausgewertet und deren Messergebnisse in die Einstellung der Festwerte der Rakelsteuerung eingebunden können.

Ferner ist die Taktrate der 3-dimensionalen Siebdruckanlage bezogen auf einen Nutzen im Mehrfachnutzendruck um mindestens zehn Prozent kürzer als bei einer Siebdruckanlage mit einem Nutzen ist.

Gemäß einem Aspekt der Erfindung umfasst die Anlage zur Herstellung von dreidimensionalen Siebdrucken einen dreidimensionalen Körper, wobei auf mindestens einem Drucknutzen mehrere Drucklagen einen Körper bilden und die Anzahl der Drucklagen auf einem oder mehreren Nutzen durch eine manuelle oder automatische Meßvorrichtung erfasst werden kann.

Ferner ist ein Aspekt der Erfindung, dass mit der 3-dimensionalen Siebdruckanlage Körper aus Keramik, Metall, Glas, Kunststoff, weiteren organischen oder anorganischen Werkstoffen, biologischen Werkstoffen oder Mischungen derselben herstellbar.

Bei den voranstehend beschriebenen Verfahren beziehungsweise den mit der beschrieben Anlage durchführbaren Verfahren handelt es sich um das Exentis 3D Mass Customization® Verfahren.

Verzeichnis der verwendeten Abkürzungen in der Erfindungsbeschreibung:
Z = Nullposition des Drucktisches; A = Absprung; H = Auftragsstärke eines Druckes
∑ = Summe; f(x) = Funktion; N = Anzahl der Druckflächen-Nutzen; X = Transportrichtung
Y = Ordinatenachse; Δ = Delta; Fig = Figur; Nr = Nummer

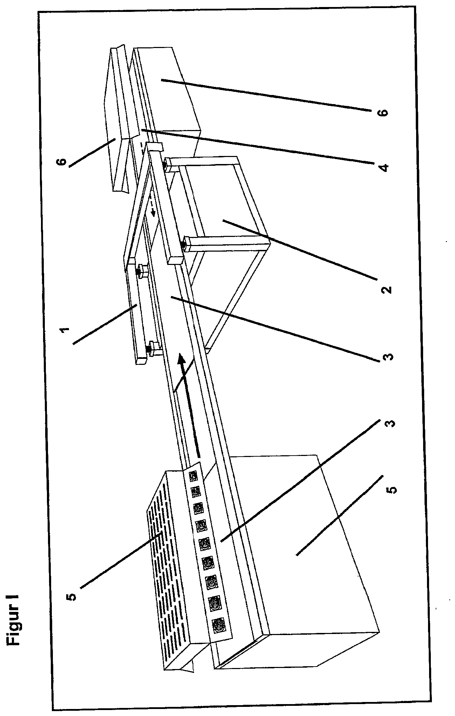

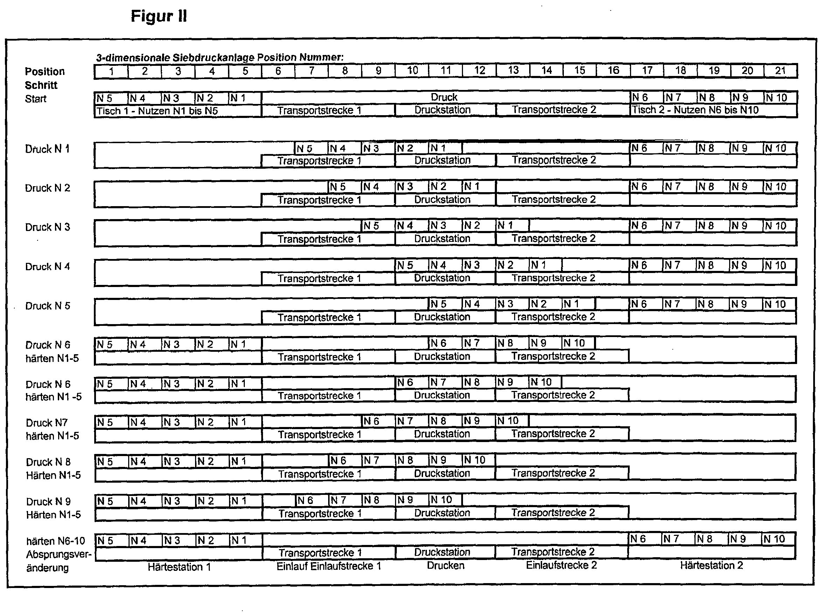

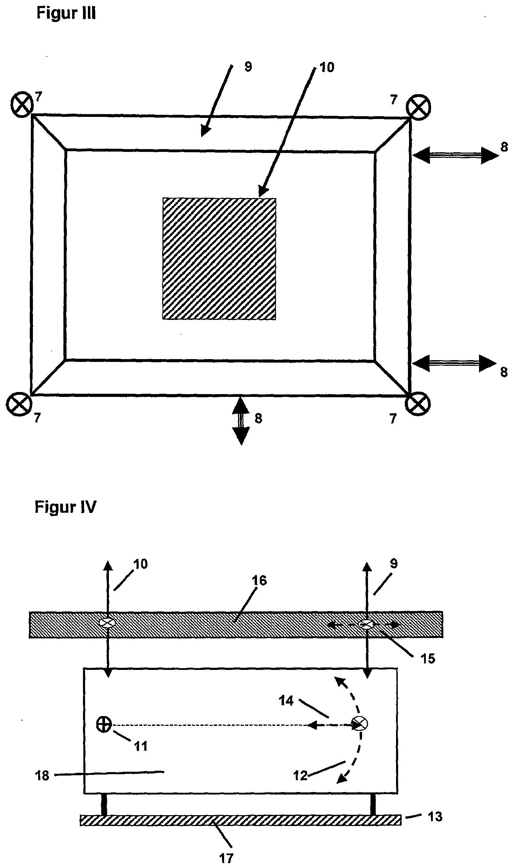

## Patentansprüche

1. Verfahren zur Herstellung von dreidimensionalen Siebdrucken, bei dem mit einem Drucksieb zumindest ein auf einem Drucktisch (3, 4) angeordneter Drucknutzen mehrfach bedruckt wird, **dadurch gekennzeichnet, dass** nach jedem durchgeführten Druck der Wert des Absprunges um die Auftragsstärke des zuvor durchgeführten Druckes erhöht wird.

2. Verfahren zur Herstellung von dreidimensionalen Siebdrucken nach dem vorstehenden Anspruch, **dadurch gekennzeichnet, dass** ein Drucktisch (3, 4) mit einer Platte mit mehreren Drucknutzen eingesetzt wird und/oder dass die Platte mit den Drucknutzen in eine Härteanlage (5, 6) verfahren wird.

3. Verfahren zur Herstellung von dreidimensionalen Siebdrucken nach einem der vorstehenden Ansprüche, **dadurch gekennzeichnet, dass** nach jedem durchgeführten Druck einer Körperlage der Ausgangswert des Absprunges bezogen auf eine Nullposition des Drucktisches (3, 4) um die Auftragsstärke des durchgeführten Druckes erhöht wird und/oder dass ein- oder mehrere Drucknutzen bedruckt werden, so dass die Änderung des Absprunges nach dem Drucken eines oder mehrerer Nutzen erfolgt bevor der nächste den Körper des jeweiligen Nutzen erhöhende Druckvorgang durchgeführt wird.

4. Verfahren zur Herstellung von dreidimensionalen Siebdrucken nach einem der vorstehenden Ansprüche, **dadurch gekennzeichnet, dass** zur Erhöhung des Absprunges bezogen auf eine Nullposition des Drucktisches (3, 4) um die Auftragsstärke des Druckes zumindest das Drucksieb, ein Rakel und/oder ein Flutrakel um das Maß der Auftragsstärke angehoben wird.

5. Verfahren zur Herstellung von dreidimensionalen Siebdrucken nach einem der Ansprüche 1 bis 4, **dadurch gekennzeichnet, dass** der Drucktisch (3, 4) um das Maß der Auftragsstärke abgesenkt wird.

6. Verfahren zur Herstellung von dreidimensionalen Siebdrucken nach einem der vorstehenden Ansprüche, **dadurch gekennzeichnet, dass** nach Bedrucken eines Drucktisches (3, 4) mit einem Nutzen, eines Drucktisches (3, 4) mit mehr als einem Nutzen, mehrere Drucktische (3, 4) mit jeweils einem Nutzen oder mehreren Drucktischen (3, 4) mit jeweils mehr als einem Nutzen eine Absprungänderung zwischen 0,2 µm und 250 µm durchgeführt wird bevor der nachfolgende Druck einer nächsten höhenaufbauenden Drucklage vorgenommen wird.

7. Verfahren zur Herstellung von dreidimensionalen Siebdrucken nach einem der vorstehenden Ansprüche, **dadurch gekennzeichnet, dass** zur Ermittlung der Auftragsstärke zur Einstellung der Änderung des Absprunges für eine nachfolgende höhenaufbauende Drucklage eine mechanische, gravimetrische, elektrische und/oder optische Bestimmung der bereits vorliegenden Aufbauhöhe des jeweiligen Körpers durchgeführt wird, um dessen Maßergebnis die Höhenänderung des Absprungs vorgenommen wird.

8. Verfahren zur Herstellung von dreidimensionalen Siebdrucken nach einem der vorstehenden Ansprüche, **dadurch gekennzeichnet, dass** zur Härtung der einzelnen Körperlagen der zumindest eine Nutzen eines Drucktisches (3, 4), vorzugsweise mehrere Nutzen eines Drucktisches (3, 4) gleichzeitig, mit einer härteauslösenden Bestrahlungseinheit einer Härtebehandlung ausgesetzt werden.

9. Verfahren zur Herstellung von dreidimensionalen Siebdrucken nach einem der vorstehenden Ansprüche, **dadurch gekennzeichnet, dass** der Hub eines Druckoberwerkes (1) oder die Absenkung des oder der Drucktische (3, 4), oder die Anhebung oder Absenkung der Siebaufnahme und des Rakelwerkes in einem fest stehenden Druckanlagenoberwerkes (1) in der Reihenfolge und Ausführung mit zentral angeordnetem Hubantrieb mit Lastübertragung über die Führungssäulen, mit Hubantrieb an jeder Führungssäule mit Lastübertragung über die Führungssäulen, mit Hubantrieb neben jeder Führungssäule mit Lastübertragung durch den Hubantrieb oder mit Hubantrieb neben jeder Führungssäule mit gewichtsentlastender Vorrichtung zumindest während des Hubvorganges vorgenommen wird.

10. Verfahren zur Herstellung von dreidimensionalen Siebdrucken nach einem der vorstehenden Ansprüche, **dadurch gekennzeichnet, dass** der Drucktisch (3, 4) oder die Drucktische (3, 4) nach dem Drucken aller Nutzen einer Ebenenlage vollständig unter eine Härteanlage (5, 6) transportiert wird/werden und dort zeitgleich die Härtung der Druckschicht vorgenommen wird, wobei die Härteanlage (5, 6) in ihrem Abstand der sich aufbauenden Höhe des Körpers anpasst wird, wobei während und/oder nach der Härtung eine Temperierung des Körpers stattfindet, welche, vorzugsweise durch Begasung oder Befeuchtung in ihrer Atmosphärenzusammensetzung, die Homogenisierung der Oberflächeneigenschaften des Körpers unterstützt.

11. Verfahren zur Herstellung von dreidimensionalen Siebdrucken nach einem der vorstehenden Ansprüche, **dadurch gekennzeichnet, dass** auf mindestens einem Drucknutzen mehrere Drucklagen einen Körper bilden und die Anzahl der Drucklagen auf einem oder mehreren Drucknutzen durch eine manuelle oder automatische Messvorrichtung erfasst wird.

12. Verfahren zur Herstellung von dreidimensionalen Siebdrucken nach einem der vorstehenden Ansprüche, **dadurch gekennzeichnet, dass** ein Körper aus Keramik, Metall, Glas, Kunststoff, weiteren organischen und/oder anorganischen Werkstoffen, biologischen Werkstoffen und/oder Mischungen derselben hergestellt werden.

13. Anlage zur Herstellung von dreidimensionalen Siebdrucken, insbesondere zur Durchführung eines Verfahrens nach einem der vorstehenden Ansprüche, umfassend einen Drucktisch (3, 4) mit zumindest einem Drucknutzen und mit einem Drucksieb mittels dessen der zumindest eine Drucknutzen mehrfach bedruckbar ist, **dadurch gekennzeichnet, dass** die Anlage dazu eingerichtet ist, nach jedem durchgeführten Druck den Wert des Absprunges um die Auftragsstärke des zuvor durchgeführten Druckes zu erhöhen.

## Claims

1. Method for producing three-dimensional screen-printed articles, in which at least one printing exploit arranged on a printing table (3, 4) is printed several times with a printing screen, **characterized in that** after each printing carried out the value of the lift-off is increased by the application thickness of the printing previously carried out.

2. Method for producing three-dimensional screen-printed articles according to the preceding claim, **characterized in that** a printing table (3, 4) with a plate with a plurality of printing exploits is used and/or that the plate with the printing exploits is moved into a curing system (5, 6).

3. Method for producing three-dimensional screen-printed articles according to one of the preceding claims, **characterized in that** after each printing of a body layer carried out, the initial value of the lift-off relative to a zero position of the printing table (3, 4) is increased by the application thickness of the printing carried out and/or **in that** one or more printing exploits are printed, so that the change in the lift-off after the printing of one or more exploits takes place before the next printing operation, increasing the body of the respective exploit, is carried out.

4. Method for producing three-dimensional screen-printed articles according to one of the preceding claims, **characterized in that** for increasing the lift-off relative to a zero position of the printing table (3, 4) by the application thickness of the printing, at least the printing screen, a squeegee and/or a flood squeegee is raised by the amount of the application thickness.

5. Method for producing three-dimensional screen-printed articles according to one of claims 1 to 4, **characterized in that** the printing table (3, 4) is lowered by the amount of the application thickness.

6. Method for producing three-dimensional screen-printed articles according to one of the preceding claims, **characterized in that** after printing on a printing table (3, 4) with one exploit, a printing table (3, 4) with more than one exploit, a plurality of printing tables (3, 4) each with one exploit or a plurality of printing tables (3, 4) each with more than one exploit, a step change of the lift-off between 0.2 µm and 250 µm is carried out before the subsequent printing of a next height-building printing layer is conducted.

7. Method for the production of three-dimensional screen-printed articles according to one of the preceding claims, **characterized in that** for determining the application thickness in order to adjusting the change of the lift-off for a subsequent height-building printing layer, a mechanical, gravimetric, electrical and/or optical determination of the already present build-up height of the respective body is carried out, by which measurement result the height change of the lift-off is made.

8. Method for the production of three-dimensional screen-printed articles according to one of the preceding claims, **characterized in that** for curing the individual body layers, the at least one exploit of a printing table (3, 4), preferably several exploits of a printing table (3, 4) simultaneously, are subjected to a curing treatment with a curing-triggering irradiation unit.

9. Method for producing three-dimensional screen-printed articles according to one of the preceding claims, **characterized in that** the lifting of an upper printing mechanism (1) or the lowering of the printing table(s) (3, 4), or the lifting or lowering of the screen receptacle and the squeegee mechanism in a fixed upper printing system (1) is conducted in the order and design with centrally arranged lift drive with load transmission via the guide columns, with lift drive on each guide column with load transmission via the guide columns, with lift drive next to each guide column with load transmission through the lift drive or with lift drive next to each guide column with weight-relieving device at least during the lifting process.

10. Method for producing three-dimensional screen-printed articles according to one of the preceding claims, **characterized in that** the printing table (3, 4) or the printing tables (3, 4) is/are transported completely under a curing unit (5, 6) after the printing of all exploits of a layer and the curing of the printed layer is carried out there at the same time, wherein the distance of the curing unit (5, 6) is adapted to the building-up height of the body, wherein during and/or after the curing a tempering of the body takes place, which preferably by gassing or humidification in its atmospheric composition supports the homogenization of the surface properties of the body.

11. Method for producing three-dimensional screen-printed articles according to one of the preceding claims, **characterized in that** on at least one printing exploit a plurality of printing layers form a body and the number of printing layers on one or more printing exploits is detected by a manual or automatic measuring device.

12. Method for the production of three-dimensional screen-printed articles according to one of the preceding claims, **characterized in that** a body of ceramic, metal, glass, plastic, further organic and/or inorganic materials, biological materials and/or mixtures thereof are produced.

13. System for the producing three-dimensional screenprinting articles, in particular for carrying out a method according to one of the preceding claims, comprising a printing table (3, 4) with at least one printing exploit and with a printing screen by means of which the at least one printing exploit can be printed several times, **characterized in that** the system is configured to increase the value of the lift-off after each printing carried out by the application thickness of the printing previously carried out.

## Revendications

1. Procédé de production d'impressions sérigraphiques tridimensionnelles, selon lequel au moins une surface d'impression disposée sur une table d'impression (3, 4) est imprimée à plusieurs reprises avec un écran, **caractérisé en ce que**, après chaque impression effectuée, la valeur du dégagement est augmentée de l'épaisseur d'application de l'impression effectuée préalablement.

2. Procédé de production d'impressions sérigraphiques tridimensionnelles selon la revendication précédente, **caractérisé en ce qu'**une table d'impression (3, 4) avec une plaque avec plusieurs surfaces d'impression est utilisée et/ou que la plaque avec les surfaces d'impression est déplacée dans une installation de durcissement (5, 6).

3. Procédé de production d'impressions sérigraphiques tridimensionnelles selon l'une quelconque des revendications précédentes, **caractérisé en ce que**, après chaque impression effectuée d'une couche de corps, la valeur de sortie du dégagement par rapport à une position zéro de la table d'impression (3, 4) est augmentée de l'épaisseur d'application de l'impression effectuée et/ou qu'une ou plusieurs surfaces d'impression sont imprimées, de sorte que la modification du dégagement après l'impression d'une ou plusieurs surfaces se produit avant que le prochain processus d'impression augmentant le corps de la surface d'impression respective ne soit effectué.

4. Procédé de production d'impressions sérigraphiques tridimensionnelles selon l'une quelconque des revendications précédentes, **caractérisé en ce que**, pour augmenter le dégagement par rapport à une position zéro de la table d'impression (3, 4) de l'épaisseur d'application de l'impression, au moins l'écran, une racle et/ou racle à déplacement est soulevé(e) de la grandeur de l'épaisseur d'application.

5. Procédé de production d'impressions sérigraphiques tridimensionnelles selon l'une quelconque des revendications 1 à 4, **caractérisé en ce que** la table d'impression (3, 4) est abaissée de la grandeur de l'épaisseur d'application.

6. Procédé de production d'impressions sérigraphiques tridimensionnelles selon l'une quelconque des revendications précédentes, **caractérisé en ce que**, après impression d'une table d'impression (3, 4) avec une surface, d'une table d'impression (3, 4) avec plus d'une surface, de plusieurs tables d'impression (3, 4) avec respectivement une surface ou de plusieurs tables d'impression (3, 4) avec respectivement plus d'une surface, une modification de dégagement comprise entre 0,2 µm et 250 µm est effectuée avant que l'impression suivante d'une prochaine couche d'impression se constituant en hauteur soit réalisée.

7. Procédé de production d'impressions sérigraphiques tridimensionnelles selon l'une quelconque des revendications précédentes, **caractérisé en ce que**, pour la détermination de l'épaisseur d'application pour le réglage de la modification du dégagement pour une couche d'impression suivante se constituant en hauteur, une définition mécanique, gravimétrique, électrique et/ou optique de la hauteur de constitution déjà présente du corps respectif est effectuée, du résultat de valeur duquel la modification de hauteur du dégagement est réalisée.

8. Procédé de production d'impressions sérigraphiques tridimensionnelles selon l'une quelconque des revendications précédentes, **caractérisé en ce que**, pour le durcissement des couches de corps individuelles, l'au moins une surface d'une table d'impression (3, 4), de préférence plusieurs surfaces d'une table d'impression (3, 4) sont exposées simultanément à un traitement de durcissement avec une unité d'irradiation déclenchant le durcissement.

9. Procédé de production d'impressions sérigraphiques tridimensionnelles selon l'une quelconque des revendications précédentes, **caractérisé en ce que** le levage d'un groupe supérieur d'impression (1) ou l'abaissement de la ou des tables d'impression (3, 4), ou l'élévation ou l'abaissement du logement d'écran et du groupe de raclage dans un groupe supérieur d'installation d'impression (1) fixe est réalisé(e) dans l'ordre et le mode de réalisation avec un entraînement de levage disposé de manière centrale avec transmission de charge par l'intermédiaire des colonnes de guidage, avec un entraînement de levage sur chaque colonne de guidage avec transmission de charge par l'intermédiaire des colonnes de guidage, avec un entraînement de levage à côté de chaque colonne de guidage avec transmission de charge par l'entraînement de levage ou avec un entraînement de levage à côté de chaque colonne de guidage avec un dispositif de décharge de poids au moins pendant le procédé de levage.

10. Procédé de production d'impressions sérigraphiques tridimensionnelles selon l'une quelconque des revendications précédentes, **caractérisé en ce que** la table d'impression (3, 4) ou les tables d'impression (3, 4) est/sont transportée(s) après l'impression de toutes les surfaces d'une couche de plan entièrement sous une installation de durcissement (5, 6) et le durcissement de la couche d'impression y est réalisé simultanément, dans lequel l'installation de durcissement (5, 6) est adaptée dans sa distance à la hauteur se constituant du corps, dans lequel, pendant et/ou après le durcissement, une thermorégulation du corps a lieu, laquelle assiste l'homogénéisation des propriétés de surface du corps de préférence par gazéification ou humidification dans sa composition atmosphérique.

11. Procédé de production d'impressions sérigraphiques tridimensionnelles selon l'une quelconque des revendications précédentes, **caractérisé en ce que** plusieurs couches d'impression forment un corps sur au moins une surface d'impression et le nombre des couches d'impression sur une ou plusieurs surfaces d'impression est détecté par un dispositif de mesure manuelle ou automatique.

12. Procédé de production d'impressions sérigraphiques tridimensionnelles selon l'une quelconque des revendications précédentes, **caractérisé en ce qu'**un corps est produit à partir de céramique, métal, verre, matière plastique, d'autres matériaux organiques et/ou anorganiques, matériaux biologiques et/ou mélanges de ceux-ci.

13. Installation de production d'impressions sérigraphiques tridimensionnelles, en particulier pour la mise en œuvre d'un procédé selon l'une quelconque des revendications précédentes, comprenant une table d'impression (3, 4) avec au moins une surface d'impression et avec un écran au moyen duquel l'au moins une surface d'impression peut être imprimée à plusieurs reprises, **caractérisée en ce que** l'installation est configurée pour augmenter la valeur du dégagement de l'épaisseur d'application de l'impression effectuée préalablement après chaque impression effectuée.
